# EUROPEAN PATENT SPECIFICATION

(11) **EP 4 350 344 B1**
(45) Date of publication and mention of the grant of the patent: **03.06.2026**
(21) Application number: 23202543.7
(22) Date of filing: 09.10.2023
(51) Int. Cl.: G01N 30/88, G01N 30/86, G01N 30/74

(54) **SAMPLE ANALYZER AND SAMPLE ANALYSIS SYSTEM FOR GLYCOSYLATED HEMOGLOBIN HBA1C**
PROBENANALYSEGERÄT UND PROBENANALYSESYSTEM FÜR GLYKIERTES HÄMOGLOBIN HBA1C
ANALYSEUR D'ÉCHANTILLON ET SYSTÈME D'ANALYSE D'ÉCHANTILLON POUR HÉMOGLOBINE GLYQUÉE HBA1C

(30) Priority: 08.10.2022 CN 202211223739; 27.09.2023 CN 202311290488
(43) Date of publication of application: 10.04.2024
(73) Proprietor: Shenzhen Mindray Bio-Medical Electronics Co., Ltd., Shenzhen, Guangdong 518057 (CN)
(72) Inventor: LIU, Hai, Shenzhen, 518057 (CN); TENG, Jin, Shenzhen, 518057 (CN); LI, Yantao, Shenzhen, 518057 (CN)
(74) Representative: KIPA AB

(56) References cited:
- CN-A- 114 689 834
- MATSUMOTO HIROAKI ET AL: "Evaluation of haemoglobin A1c measurement by an enzymatic method using an automated analyser that has an on-board haemolysis system", ANNALS OF CLINICAL BIOCHEMISTRY, 29 July 2013 (2013-07-29), GB, pages 443 - 449, XP055907711, ISSN: 0004-5632, Retrieved from the Internet <URL:http://journals.sagepub.com/doi/full-xml/10.1177/0004563213476859> [retrieved on 20240222], DOI: 10.1177/0004563213476859
- ANONYMOUS: "HEMOGLOBIN A1c ADVANCED", 31 December 2020 (2020-12-31), XP093069071, Retrieved from the Internet <URL:https://media.beckmancoulter.com/-/media/diagnostics/products/chemistry/hba1c/documents/hba1c-datasheet-2020-7829.pdf> [retrieved on 20230731]

## Description

### TECHNICAL FIELD

The invention relates to the field of medical equipment, in particular to a sample analyzer and a sample analysis system with the sample analyzer.

### BACKGROUND

HbA1c (glycosylated hemoglobin) is an important index for diabetes screening. Liquid chromatography is a common method to measure HbA1c. An accuracy of the HbA1c measurement is mainly interfered with by interfering substances such as variants, drugs and abnormal proteins. Common variants, such as HbE, HbD, HbS and HbC, interfere with a calculation of chromatographic area of HbA0 (non-glycosylated hemoglobin), resulting in a lower measured value of HbA1c than a true value.

Glycosylated hemoglobin analyzer (such as High Performance Liquid Chromatograph, HPLC) has requirements for a measurement speed and accuracy. The accuracy of the measurement mainly depends on an ability to eliminate the interference of the variants from the glycosylated hemoglobin analyzer. With the increase of diabetic patients, the requirement for the measurement speed also increases accordingly.

The glycosylated hemoglobin analyzers provided by the related art may be broadly categorized as follows.
(1) Both a fast mode and variant mode are provided, and its main disadvantage is that the variant mode and fast mode are realized by using two sets of eluents with different components and two chromatographic columns respectively. If a user needs to take into account the requirements of speed and accuracy, he needs to purchase two sets of eluents with different components and two chromatographic columns.
(2) One set of eluent and one chromatographic column are used, and its main disadvantage is that only the variant mode is available, and its measurement speed is relatively slow.
(3) Two sets of eluents and one chromatographic column are used to realize the variant mode and fast mode, and its main disadvantage is that the user cannot determine which mode to use for testing when facing an unknown sample.

Patent application CN 114689834A and documents MATSUMOTO HIROAKI ET AL: "Evaluation of haemoglobin Ale measurement by an enzymatic method using an automated analyser that has an on-board haemolysis system", ANNALS OF CLINICAL BIOCHEMISTRY, 29 July 2013 (2013-07-29), pages 443-449, XP055907711, and Anonymous: "HEMOGLOBIN Ale ADVANCED", 31 December 2020 (2020-12-31), XP093069071 provide teachings related to the technical field of the application.

### SUMMARY

The present invention is defined in the appended claims. The first object of the invention is to provide a sample analyzer, which aims to solve the technical problem that both the measurement speed and accuracy cannot be taken into account when a parameter of glycosylated hemoglobin is detected by using liquid chromatography in the related art.

The features of the device according to the present invention are defined in the independent claims, and the preferable features according to the present invention are defined in the dependent claims.

To this end, the invention provides a sample analyzer including a specimen supply device, a chromatographic separation device and a first controller.

The specimen supply device is configured to supply at least a first specimen and a second specimen to the chromatographic separation device, respectively.

The chromatographic separation device is controlled by the first controller to elute the first specimen and perform chromatographic analysis on a first solution to be detected that is obtained by eluting the first specimen in a first operation mode, and to elute the second specimen and perform chromatographic analysis on a second solution to be detected that is obtained by eluting the second specimen in a second operation mode.

The first controller is configured to analyze feedback information from the chromatographic separation device in the first operation mode to obtain a parameter of glycosylated hemoglobin in the first specimen and a conclusion as to whether there is an interfering substance in the first specimen.

The first controller is further configured to analyze feedback information from the chromatographic separation device in the second operation mode to obtain a parameter of glycosylated hemoglobin in the second specimen and a parameter of an interfering substance in the second specimen.

Elution duration of the first specimen by the chromatographic separation device in the first operation mode is shorter than that of the second specimen by the chromatographic separation device in the second operation mode.

In an implementation, the chromatographic separation device includes a chromatographic column, an eluent supply device and a first optical detection assembly.

The specimen supply device is configured to supply at least the first specimen and the second specimen to the chromatographic column, respectively.

The eluent supply device is controlled by the first controller to prepare a first liquid and a second liquid into an eluent, and to supply eluents containing the second liquid with different concentrations to the chromatographic column respectively.

The chromatographic column is configured to elute the first specimen and the second specimen with the eluents respectively.

The first optical detection assembly is configured to perform the chromatographic analysis on the first solution to be detected that is obtained by eluting the first specimen in the chromatographic column and the second solution to be detected that is obtained by eluting the second specimen in the chromatographic column respectively.

The first controller is further configured to control the eluent supply device to prepare the first liquid and the second liquid into the eluents containing the second liquid with different concentrations according to a first concentration control mode in the first operation mode, and to supply the eluents containing the second liquid with different concentrations to the chromatographic column respectively, so as to elute the first specimen in the chromatographic column.

The first controller is further configured to control the eluent supply device to prepare the first liquid and the second liquid into the eluents containing the second liquid with different concentrations according to a second concentration control mode in the second operation mode, and to supply the eluents containing the second liquid with different concentrations to the chromatographic column respectively, so as to elute the second specimen in the chromatographic column.

The first concentration control mode is different from the second concentration control mode.

In an implementation, the first controller is further configured to control the chromatographic separation device to elute the first specimen in the first operation mode and elute the second specimen in the second operation mode, using the same chromatographic column.

In an implementation, the eluent supply device includes a mixing component, a first infusion power component and a second infusion power component.

The first infusion power component is configured to deliver the first liquid from a first container to the mixing component.

The second infusion power component is configured to deliver the second liquid from a second container to the mixing component.

The mixing component is configured to supply the eluents formed by at least one of the first liquid and the second liquid to the chromatographic column.

The first controller is further configured to control the mixing component to supply the eluents containing the second liquid with different concentrations to the chromatographic column by controlling operating parameters of the first infusion power component and the second infusion power component, respectively.

In an implementation, the first operation mode includes a first elution stage, a second elution stage and a third elution stage arranged in sequence, and the second operation mode includes a fourth elution stage, a fifth elution stage and a sixth elution stage arranged in sequence.

The first elution stage and the fourth elution stage are used for eluting and analyzing the glycosylated hemoglobin in the first specimen and the glycosylated hemoglobin in the second specimen respectively. The second elution stage and the fifth elution stage are used for eluting and analyzing non-glycosylated hemoglobin in the first specimen and non-glycosylated hemoglobin in the second specimen respectively. The third elution stage is used for eluting and analyzing the interfering substance in the first specimen. The sixth elution stage is used for eluting and analyzing the interfering substance in the second specimen.

A concentration of the second liquid in an eluent used in the third elution stage is greater than a concentration of the second liquid in an eluent used in the first elution stage and greater than a concentration of the second liquid in an eluent used in the second elution stage.

A concentration of the second liquid in an eluent used in the sixth elution stage is greater than a concentration of the second liquid in an eluent used in the fourth elution stage and greater than a concentration of the second liquid in an eluent used in the fifth elution stage.

The eluents are prepared from at least one of the first liquid and the second liquid, and an ionic strength of the first liquid is less than an ionic strength of the second liquid.

In an implementation, the concentration of the second liquid in the eluent used in the second elution stage is greater than the concentration of the second liquid in the eluent used in the first elution stage.

The concentration of the second liquid in the eluent used in the fifth elution stage is greater than the concentration of the second liquid in the eluent used in the fourth elution stage.

In an implementation, a concentration of a second liquid in an eluent used in a transition interval between the second elution stage and the third elution stage varies to a greater extent than a concentration of the second liquid in an eluent used in a transition interval between the fifth elution stage and the sixth elution stage.

In an implementation, duration of the fifth elution stage is longer than duration of the second elution stage; and/or, duration of the sixth elution stage is longer than duration of the third elution stage.

In an implementation, duration of the first elution stage is longer than duration of the second elution stage and longer than duration of the third elution stage.

In an implementation, the first controller is further configured to analyze the feedback information from the chromatographic separation device to obtain a chromatographic curve in the first operation mode, and to determine that there is an interfering substance in the first specimen when more than two peaks are formed in the chromatographic curve obtained in the second elution stage and the third elution stage; and/or, the first controller is further configured to analyze the feedback information from the chromatographic separation device to obtain a chromatographic curve in the second operation mode. The chromatographic curve obtained in the fifth elution stage and the sixth elution stage shows more than two peaks.

In an implementation, the first controller is further configured to: in response to determining that there is an interfering substance in the first specimen based on the feedback information from the chromatographic separation device in the first operation mode, control the specimen supply device to supply the second specimen to the chromatographic separation device, and to control the chromatographic separation device to elute the second specimen and to perform the chromatographic analysis on the second solution to be detected that is obtained by eluting the second specimen in the second operation mode.

In an implementation, the sample analyzer further includes a display.

The first controller is further configured to: in response to determining that there is the interfering substance in the first specimen based on the feedback information from the chromatographic separation device in the first operation mode, control the display to display a display interface including at least the parameter of the glycosylated hemoglobin in the first specimen and prompt information of presence of the interfering substance in the first specimen.

In an implementation, the sample analyzer further includes a display.

The first controller is further configured to: in response to determining that there is the interfering substance in the first specimen based on the feedback information from the chromatographic separation device in the first operation mode, control the display to display a display interface including at least prompt information of presence of the interfering substance in the first specimen and prompt information as to whether to switch to the second operation mode.

The first controller is further configured to: obtain an instruction for switching to the second operation mode, control the specimen supply device to supply the second specimen to the chromatographic separation device, and control the chromatographic separation device to elute the second specimen and perform the chromatographic analysis on the second solution to be detected that is obtained by eluting the second specimen in the second operation mode.

In an implementation, the chromatographic separation device includes a chromatographic column, an eluent supply device and a first optical detection assembly.

The specimen supply device is configured to supply at least the first specimen and the second specimen to the chromatographic column, respectively.

The eluent supply device is controlled by the first controller to prepare a first liquid and a second liquid into an eluent, and to supply eluents containing the second liquid with different concentrations to the chromatographic column respectively.

The chromatographic column is configured to elute the first specimen and the second specimen with the eluents respectively.

The first optical detection assembly is configured to perform the chromatographic analysis on the first solution to be detected that is obtained by eluting the first specimen in the chromatographic column and the second solution to be detected that is obtained by eluting the second specimen in the chromatographic column respectively.

The first controller is configured to: control the specimen supply device to supply the first specimen to the chromatographic column; control the eluent supply device to prepare the first liquid and the second liquid into the eluents containing the second liquid with different concentrations according to a first concentration control mode and to supply the eluents containing the second liquid with different concentrations to the chromatographic column respectively, so as to elute the first specimen in the chromatographic column; and control the first optical detection assembly to perform the chromatographic analysis on the first solution to be detected that is obtained in the chromatographic column.

The first controller is further configured to: in response to determining that there is an interfering substance in the first specimen based on feedback information from the chromatographic separation device, control the specimen supply device to supply the second specimen to the chromatographic separation device; control the eluent supply device to prepare the first liquid and the second liquid into the eluents containing the second liquid with different concentrations according to a second concentration control mode, and to supply the eluents containing the second liquid with different concentrations to the chromatographic column respectively, so as to elute the second specimen in the chromatographic column; and control the first optical detection assembly to perform the chromatographic analysis on the second solution to be detected that is obtained in the chromatographic column.

The first concentration control mode is different from the second concentration control mode.

The sample analyzer provided by the first object of the invention can control the chromatographic separation device by the first controller to carry out elution and chromatographic analysis on the first specimen in the first operation mode and the second specimen in the second operation mode respectively. The first controller can analyze and obtain the parameter of the glycosylated hemoglobin in the first specimen and the conclusion as to whether there is an interfering substance in the first specimen in the first operation mode, and can analyze and obtain the parameter of the glycosylated hemoglobin in the second specimen and the parameter of the interfering substance in the second specimen in the first operation mode, so that the accuracy of measurement data can be ensured by adopting the second operation mode and the measurement speed can be ensured by adopting the first operation mode. In addition, since the first controller can analyze and obtain the conclusion as to whether there is an interfering substance in the first specimen in the first operation mode, the situation that the user cannot determine which mode to use for testing when facing an unknown sample can be avoided, and the usability of the sample analyzer is improved.

The second object of the invention is to provide a sample analyzer. The first controller is arranged to control the eluent supply device to prepare the first liquid and the second liquid into the eluents containing the second liquid with different concentrations according to the first concentration control mode to elute and analyze the first specimen in the chromatographic column, and then to control the eluent supply device to prepare the first liquid and the second liquid into the eluents containing the second liquid with different concentrations according to the second concentration control mode to elute and analyze the second specimen in the chromatographic column, in response to determining that there is an interfering substance in the first specimen based on the feedback information from the chromatographic separation device. In this way, the eluent supplying scheme in the second concentration control mode can be adopted to ensure the accuracy of measurement data and the eluent supplying scheme in the first concentration control mode can be adopted to ensure the measurement speed, so that both the measurement speed and the accuracy can be taken into account. In addition, when the first specimen in the chromatographic column is eluted and analyzed by using the eluent prepared according to the first concentration control mode, if the first controller determines that there is an interfering substance in the first specimen based on the feedback information from the chromatographic separation device, the eluent supply device can be automatically controlled to prepare the first liquid and the second liquid into the eluents containing the second liquid with different concentrations according to the second concentration control mode for eluting and analyzing the second specimen in the chromatographic column, thereby avoiding the situation that the user cannot determine which mode to use for testing when facing an unknown sample, and improving the usability of the sample analyzer. The eluent supply device can use the first liquid and the second liquid to prepare eluents with different mixing ratios online according to the first concentration control mode and the second concentration control mode, so as to meet the eluent supplying demand for different measurements. Therefore, one set of eluents can be used to meet different eluent analysis requirements, which is conducive to reducing the quantity of materials and reducing the cost of using the sample analyzer for the user.

The sample analyzer provided by the invention can control the chromatographic separation device by the first controller to carry out elution and chromatographic analysis on the first specimen in the first operation mode and the second specimen in the second operation mode respectively, and if it is determined that there is an interfering substance in the first specimen based on the feedback information from the chromatographic separation device in the first operation mode, the specimen supply device is controlled to supply the second specimen to the chromatographic separation device and the chromatographic separation device is controlled to carry out elution and chromatographic analysis on the second specimen in the second operation mode, so that the accuracy of measurement data can be ensured by adopting the second operation mode and the measurement speed can be ensured by adopting the first operation mode. In addition, since the first controller can analyze and obtain the conclusion as to whether there is an interfering substance in the first specimen in the first operation mode, the situation that the user cannot determine which mode to use for testing when facing an unknown sample can be avoided, and the usability of the sample analyzer is improved.

### BRIEF DESCRIPTION OF THE DRAWINGS

In order to explain more clearly the embodiments of the invention or the technical solutions of the related art, the drawings required to be used in the description of the embodiments or the related art will be briefly described below. It will be apparent that the drawings described below are only some embodiments of the invention, and other drawings may be obtained from the structure shown in these drawings without any creative effort by those of ordinary skill in the art.
FIG. 1 is a schematic diagram of a liquid path of a first sample analyzer in an elution state according to an embodiment of the invention.
FIG. 2 is a schematic diagram of a liquid path of a first sample analyzer in a specimen injection state according to an embodiment of the invention.
FIG. 3 is a schematic diagram of a liquid path of a chromatographic separation device according to an embodiment of the invention.
FIG. 4 is a schematic diagram of a concentration change of a second liquid in an eluent in a first operation mode according to an embodiment of the invention, where the abscissa is time in the unit of seconds, and the ordinate is a proportion of volume of the second liquid in the eluent, that is, a ratio of the volume of the second liquid to a total volume of the eluent (the total volume of the eluent is a sum of the volume of the second liquid and a volume of a first liquid).
FIG. 5 is a chromatographic curve obtained in a first operation mode when a first type of interfering substance exists in a first specimen according to an embodiment of the invention, where the abscissa is time in the unit of centiseconds, and the ordinate is spectral intensity in the unit of mOD.
FIG. 6 is a chromatographic curve obtained in a first operation mode when a second type of interfering substance exists in a first specimen according to an embodiment of the invention.
FIG. 7 is a chromatographic curve obtained in a first operation mode when a third type of interfering substance exists in a first specimen according to an embodiment of the invention.
FIG. 8 is a schematic diagram of a concentration change of a second liquid in an eluent in a second operation mode according to an embodiment of the invention, where the abscissa is time in the unit of seconds, and the ordinate is a proportion of volume of the second liquid in the eluent, that is, a ratio of the volume of the second liquid to a total volume of the eluent (the total volume of the eluent is a sum of the volume of the second liquid and a volume of a first liquid).
FIG. 9 is a chromatographic curve obtained in a second operation mode according to an embodiment of the invention.
FIG. 10 is a schematic diagram of a concentration change of a second liquid in an eluent in a third operation mode according to the invention, where the abscissa is time in the unit of seconds, and the ordinate is a proportion of volume of the second liquid in the eluent, that is, a ratio of the volume of the second liquid to a total volume of the eluent (the total volume of the eluent is a sum of the volume of the second liquid and a volume of a first liquid).
FIG. 11 is a chromatographic curve obtained in a third operation mode according to the invention.
FIG. 12 is a structural diagram of a sample analysis system according to an embodiment not being part of the invention.
FIG. 13 is a schematic diagram of the composition of a sample analysis system according to an embodiment not being part of the invention.
FIG. 14 is a schematic diagram of the composition of a second sample analyzer according to an embodiment not being part of the invention.
FIG. 15 is a schematic diagram of a liquid path of a second sample analyzer according to an embodiment not being part of the invention.

Description of the reference numbers: 1, sample analysis system; 10, first sample analyzer; 100, chromatographic separation device; 110, chromatographic column; 120, eluent supply device; 121, mixing component; 122, first infusion power component; 123, second infusion power component; 124, first container; 125, second container; 130, first optical detection assembly; 200, specimen supply device; 20, second sample analyzer; 21, second sample dispensing device; 22, second reagent dispensing device; 23, second optical detection assembly; 2301, second reaction cell; 2302, flow chamber; 2303, optical detection component; 2304, first sample preparation pipeline; 2305, sheath fluid pipeline; 24, hemoglobin detection assembly; 2401, hemoglobin detection cell; 2402, hemoglobin detection element; 25, impedance detection assembly; 2501, impedance detection cell; 2502, impedance detector; 2503, second sample preparation pipeline; 26, third controller; 30, sample management device; 40, transfer track; 50, second controller.

### DETAILED DESCRIPTION

The technical solutions in the embodiments of the invention will be clearly and completely described below in conjunction with the accompanying drawings in the embodiments of the invention. It will be apparent that the described embodiments are only part of the embodiments of the invention, and not all of the embodiments. All other embodiments obtained by those of ordinary skill in the art based on the embodiments in the invention without creative effort shall fall within the scope of protection of the invention, which is defined by the appended claims.

It should be noted that all directivity indications (such as up, down, left, right, front, back, etc.) in the embodiment of the invention are only used to explain a relative positional relationship and motion among the components in a specific posture, and if the specific posture is changed, the directivity indications are changed accordingly.

It should also be noted that when an element is said to be "fixed" or "arranged" on another element, it may be directly on the other element or may be accompanied by an intervening element. When an element is said to be "connected" to another element, it may be directly connected to another element or it may be indirectly connected to another element thorough an intervening element.

In addition, the descriptions in the invention relating to "first", "second" and the like are for descriptive purposes only and cannot be construed as indicating or implying their relative importance or implying the number of technical features indicated. Thus, the features defined as "first", "second" may explicitly or implicitly include at least one of the features. In addition, the technical solutions in the various embodiments may be combined with each other on the basis that the person of ordinary skill in the art can implement it.

### First Embodiment

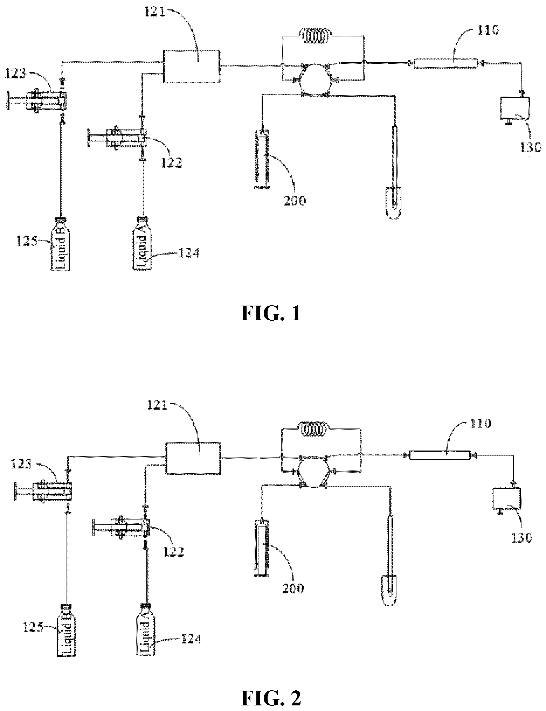

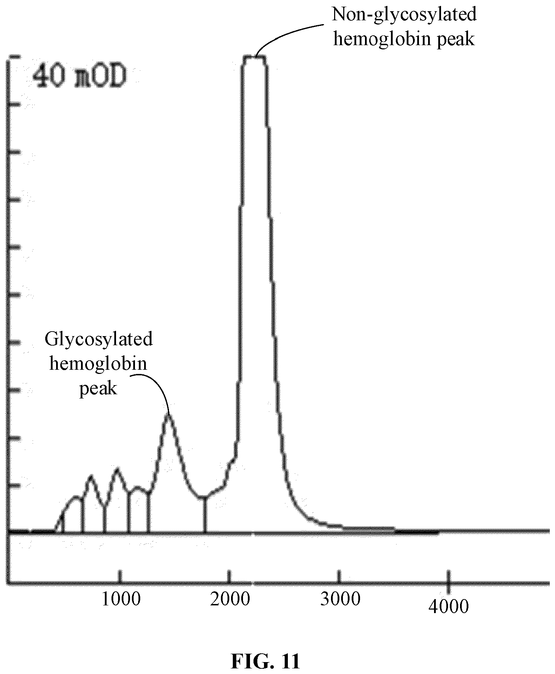

As shown in FIGS. 1 to 11, a first sample analyzer 10 provided in the first embodiment of the invention includes a specimen supply device 200, a chromatographic separation device 100 and a first controller. The specimen supply device 200 is configured to supply a specimen to the chromatographic separation device 100. The chromatographic separation device 100 is controlled by the first controller to elute the specimen and perform chromatographic analysis on a solution to be detected that is obtained by eluting the specimen.

In an implementation, the first sample analyzer 10 has a first operation mode and a second operation mode. The specimen supply device 200 is configured to supply at least a first specimen and a second specimen to the chromatographic separation device 100, respectively, that is, the specimen supply device 200 is configured to supply at least the first specimen to the chromatographic separation device 100 and the second specimen to the chromatographic separation device 100, respectively. The chromatographic separation device 100 is controlled by the first controller to elute the first specimen and perform chromatographic analysis on a first solution to be detected that is obtained by eluting the first specimen in a first operation mode, and to elute the second specimen and perform chromatographic analysis on a second solution to be detected that is obtained by eluting the second specimen in a second operation mode. The first specimen and the second specimen are made of samples in the same sample container. The first controller is configured to analyze feedback information from the chromatographic separation device 100 in the first operation mode to obtain a parameter of glycosylated hemoglobin in the first specimen and a conclusion as to whether there is an interfering substance in the first specimen. The first controller is further configured to analyze feedback information from the chromatographic separation device 100 in the second operation mode to obtain a parameter of the glycosylated hemoglobin in the second specimen and a parameter of the interfering substance in the second specimen. The first operation mode is used for quickly detecting the parameter of the glycosylated hemoglobin in the first specimen and determining whether there is an interfering substance, and if there is no interfering substance, the detection result of the first operation mode may be output as a measurement result of the glycosylated hemoglobin in the sample. If the first controller determines that there is an interfering substance in the first specimen based on the detection result of the first operation mode, it is determined that measurement data of the first operation mode is inaccurate. At this time, the second operation mode may be adopted to re-elute and analyze the sample. Because the first controller can obtain the parameter of the interfering substance based on the measurement data of the second operation mode, the parameter of the glycosylated hemoglobin in the sample can be accurately analyzed, and the accuracy of the measurement data can be ensured. In specific application, the first operation mode may be used to ensure a measurement speed, and the second operation mode may be used to ensure the accuracy of the measurement data. In addition, since the first controller can analyze and obtain the conclusion as to whether there is an interfering substance in the first specimen in the first operation mode, the situation that the user cannot determine which mode to use for testing when facing an unknown sample can be avoided, and a usability of the sample analyzer is improved.

In an implementation, the first operation mode is a default operation mode of the first sample analyzer 10, and the first sample analyzer 10 elutes and analyzes the first specimen in the first operation mode by default in the case of no user intervention and selection, to ensure the measurement speed of the glycosylated hemoglobin of most samples.

In an implementation, the chromatographic separation device 100 includes a chromatographic column 110, an eluent supply device 120 and a first optical detection assembly 130. The specimen supply device 200 is configured to supply at least the first specimen and the second specimen to the chromatographic column 110 respectively, that is, the specimen supply device 200 is configured to supply the first specimen to the chromatographic column 110 and supply the second specimen to the chromatographic column 110. The eluent supply device 120 is configured to supply an eluent to the chromatographic column 110. The chromatographic column 110 is configured to elute the first specimen with the eluent and elute the second specimen with the eluent. The first optical detection assembly 130 is configured to perform chromatographic analysis on a first solution to be detected that is obtained by eluting the first specimen in the chromatographic column 110 and perform the chromatographic analysis on a second solution to be detected that is obtained by eluting the second specimen in the chromatographic column 110, respectively.

In an implementation, there is one eluent supply device 120 and the first and second operation modes share the same eluent supply device 120 to supply the eluent. The first controller is configured to control the chromatographic separation device 100 to supply the eluent to the chromatographic column 110 in the first operation mode and the second operation mode respectively, using the same eluent supply device 120.

In an implementation, the eluent supply device 120 is controlled by the first controller to prepare the eluent into eluents with different concentrations on line, to meet the elution requirements in the first operation mode and the second operation mode. In this implementation, the eluent analysis requirements of different operation modes can be met by using one kind of eluent, and the material quantity and material cost can be reduced.

In an implementation, the eluent supply device 120 is controlled by the first controller to prepare a first liquid and a second liquid into the eluent and to supply the eluents containing the second liquid with different concentrations to the chromatographic column 110 respectively, that is, the eluent supply device 120 may be controlled by the first controller to prepare the eluents with different mixing ratios from the first liquid and the second liquid and supply them to the chromatographic column 110.

In an implementation, an ionic strength of the first liquid is less than an ionic strength of the second liquid. The first liquid may be specifically liquid A, and the second liquid may be specifically liquid B.

In an implementation, the first controller is further configured to control the eluent supply device 120 to prepare the first liquid and the second liquid into eluents containing the second liquid with different concentrations according to a first concentration control mode in the first operation mode, and supply the eluents containing the second liquid with different concentrations to the chromatographic column 110 respectively, so as to elute the first specimen in the chromatographic column 110. The first controller is further configured to control the eluent supply device 120 to prepare the first liquid and the second liquid into eluents containing the second liquid with different concentrations according to a second concentration control mode in the second operation mode, and supply the eluents containing the second liquid with different concentrations to the chromatographic column 110 respectively, so as to elute the second specimen in the chromatographic column 110. The first concentration control mode is different from the second concentration control mode. The difference between the first concentration control mode and the second concentration control mode mainly refers to a difference in the way of preparing the eluent online between the first operation mode and the second operation mode in the elution analysis process. In the first operation mode and the second operation mode, the eluent consisting of the first liquid and the second liquid is used, and only the mixing ratio of the first liquid to the second liquid is adjusted and controlled differently, so that the material quantity and the material cost are effectively reduced. In the implementation, the eluent is prepared online, and the mixing ratio is adjusted and controlled in real time by the first controller.

In an implementation, there is one chromatographic column 110. The first controller is further configured to control the chromatographic separation device 100 to perform the elution of the first specimen in the first operation mode and the elution of the second specimen in the second operation mode respectively, using the same chromatographic column 110, i.e. the elution of the first specimen in the first operation mode and the elution of the second specimen in the second operation mode are performed using the same chromatographic column 110. In the implementation, one chromatographic column 110 and one kind of eluent can meet the elution analysis requirements of the first specimen in the first operation mode and the second specimen in the second operation mode, and the material quantity is small and the material cost is low.

In an implementation, the eluent supply device 120 includes a mixing component 121, a first infusion power component 122 for delivering the first liquid from a first container 124 to the mixing component 121, and a second infusion power component 123 for delivering the second liquid from a second container 125 to the mixing component 121. The mixing component 121 is configured to supply the eluent formed from the first liquid and/or the second liquid to the chromatographic column 110. The first controller is further configured to control the mixing component 121 to supply the eluents containing the second liquid with different concentrations to the chromatographic column 110 by controlling operating parameters of the first infusion power component 122 and the second infusion power component 123, respectively.

In an implementation, the first infusion power component 122 may be a pump or a syringe.

In an implementation, the second infusion power component 123 may be a pump or a syringe.

In an implementation, elution duration of the first specimen by the chromatographic separation device 100 in the first operation mode is shorter than that of the second specimen by the chromatographic separation device 100 in the second operation mode, so that the design requirement of the first sample analyzer 10 for rapid measurement of the glycosylated hemoglobin can be met by adopting the first operation mode, and the design requirement of the first sample analyzer 10 for accurate measurement of the glycosylated hemoglobin can be met by adopting the second operation mode.

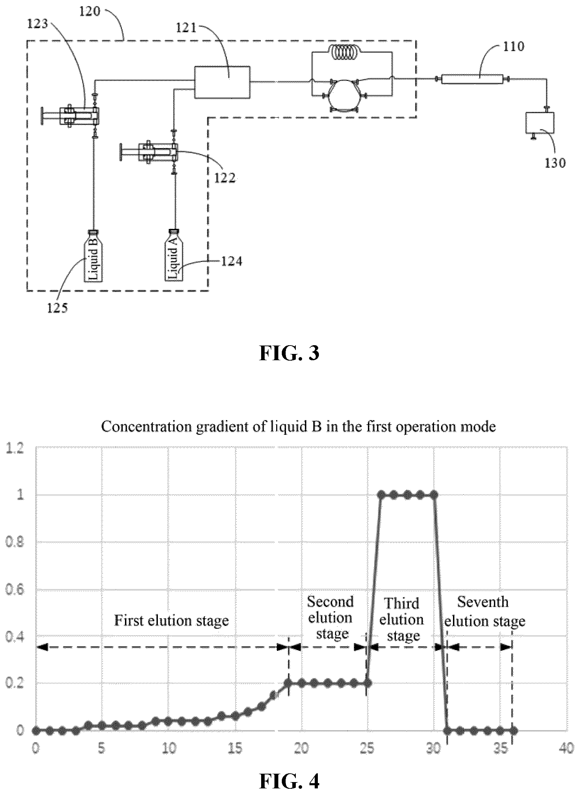

Referring to FIG. 4, in an implementation, the first operation mode includes a first elution stage, a second elution stage and a third elution stage arranged in sequence. The first elution stage is used for eluting and analyzing the glycosylated hemoglobin in the first specimen, and the eluting and analyzing may be performed to form a glycosylated hemoglobin peak in a chromatographic curve. The second elution stage is used for eluting and analyzing the non-glycosylated hemoglobin in the first specimen, and the eluting and analyzing may be performed to form at least a non-glycosylated hemoglobin peak in the chromatographic curve. The third elution stage is used for eluting the interfering substance in the first specimen.

In an implementation, the first controller is further configured to analyze the feedback information from the chromatographic separation device 100 to obtain the chromatographic curve in the first operation mode, and to determine that there is an interfering substance in the first specimen if more than two peaks are formed in the chromatographic curve obtained by analysis in the second elution stage and the third elution stage. Specifically, when the interfering substance exists in the first specimen, more than two peaks are formed by analysis in the second elution stage and the third elution stage, one of which is the non-glycosylated hemoglobin peak and the other are interfering substance peaks.

In an implementation, the first controller is further configured to analyze the feedback information from the chromatographic separation device 100 to obtain the chromatographic curve in the second operation mode. The chromatographic curve obtained by analysis in the fifth elution stage and the sixth elution stage shows more than two peaks. In the fifth and sixth elution stages, more than two peaks are formed, one of which is the non-glycosylated hemoglobin peak and the other are interfering substance peaks.

In an implementation, an interval between two adjacent peaks in the peaks formed in the fifth elution stage and the sixth elution stage is longer than an interval between two adjacent peaks in the peaks formed in the second elution stage and the third elution stage.

Referring to FIG. 4, in an implementation, a concentration of the second liquid in the eluent employed in the third elution stage is greater than a concentration of the second liquid in the eluent employed in the first elution stage and greater than a concentration of the second liquid in the eluent employed in the second elution stage. In FIG. 4, liquid B is the second liquid. In the figure, the concentration of the second liquid is represented by a volume ratio of the second liquid in the eluent, that is, the ordinate in FIG. 4 is a ratio of a volume of the second liquid to a total volume of the eluent (the total volume of the eluent is the sum of the volume of the second liquid and a volume of the first liquid). For example, the ordinate of 0 indicates that the volume ratio of the second liquid in the eluent is 0, that is, the ratio of the volume of the second liquid to the total volume of the eluent is 0, and the eluent is made of the first liquid only. The ordinate of 0.2 indicates that the volume ratio of the second liquid in the eluent is 0.2, that is, the ratio of the volume of the second liquid to the total volume of the eluent is 0.2, and the second liquid and the first liquid are mixed in the ratio of 2:8 (volume ratio) to prepare the eluent. The ordinate of 0.4 indicates that the volume ratio of the second liquid in the eluent is 0.4, that is, the ratio of the volume of the second liquid to the total volume of the eluent is 0.4, and the second liquid and the first liquid are mixed in the ratio of 4:6 (volume ratio) to prepare the eluent. The ordinate of 0.6 indicates that the volume ratio of the second liquid in the eluent is 0.6, that is, the ratio of the volume of the second liquid to the total volume of the eluent is 0.6, and the second liquid and the first liquid are mixed in the ratio of 6:4 (volume ratio) to prepare the eluent. The ordinate of 0.8 indicates that the volume ratio of the second liquid in the eluent is 0.8, that is, the ratio of the volume of the second liquid to the total volume of the eluent is 0.8, and the second liquid and the first liquid are mixed in the ratio of 8:2 (volume ratio) to prepare the eluent. The ordinate of 1 indicates that the volume ratio of the second liquid in the eluent is 1, that is, the ratio of the volume of the second liquid to the total volume of the eluent is 1, and the eluent is made of the second liquid only.

In an implementation, the concentration of the second liquid in the eluent employed in the second elution stage is greater than the concentration of the second liquid in the eluent employed in the first elution stage.

In an implementation, the first elution stage transitions to the second elution stage in a time period close to the second elution stage with a tendency to gradually increase the concentration of the second liquid in the eluent.

In an implementation, duration of the first elution stage is longer than duration of the second elution stage and longer than duration of the third elution stage.

In an implementation, the concentration of the second liquid in the eluent in the third elution stage is 1, i.e. the ratio of the volume of the second liquid to the total volume of the eluent is 1, and the eluent is made of the second liquid only.

In an implementation, the first operation mode further includes a seventh elution stage, which is arranged after the third elution stage and used to elute other components of the first specimen remaining in the chromatographic column 110 to avoid interference with measurement data of the next specimen.

In an implementation, the concentration of the second liquid in the eluent in the seventh elution stage is 0, that is, the volume ratio of the second liquid in the eluent is 0, and the eluent is made of the first liquid only.

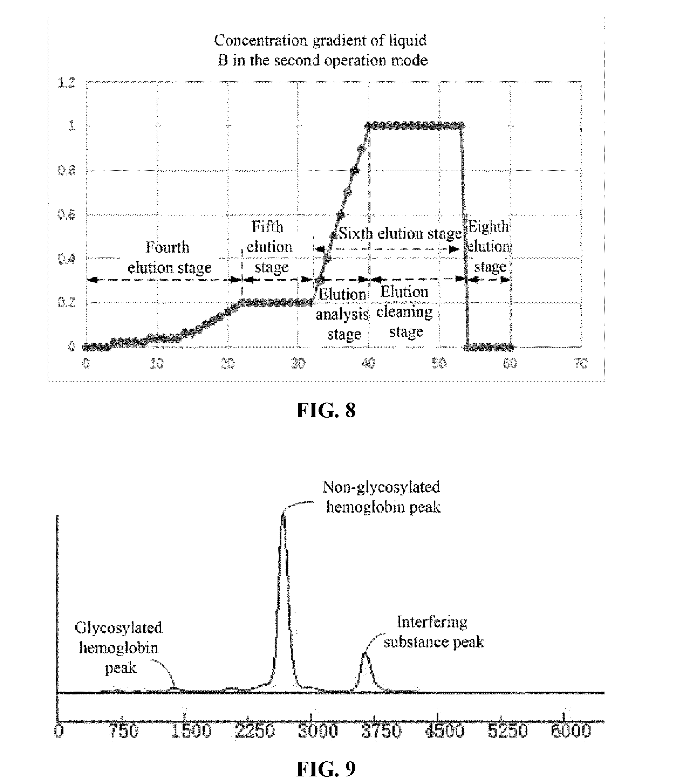

Referring to FIG. 8 in an implementation the second operation mode includes a fourth elution stage, a fifth elution stage and a sixth elution stage arranged in sequence. The fourth elution stage is used for eluting and analyzing the glycosylated hemoglobin in the second specimen, and the eluting and analyzing are performed to form a glycosylated hemoglobin peak in the chromatographic curve. The fifth elution stage is used for eluting and analyzing the non-glycosylated hemoglobin in the second specimen, and the eluting and analyzing are performed to form a non-glycosylated hemoglobin peak in the chromatographic curve. The sixth elution stage is used for eluting and analyzing the interfering substance in the second specimen, and the eluting and analyzing are performed to form an interfering substance peak in the chromatographic curve.

In an implementation, a concentration of the second liquid in an eluent employed in the sixth elution stage is greater than a concentration of the second liquid in an eluent employed in the fourth elution stage and greater than a concentration of the second liquid in an eluent employed in the fifth elution stage.

In an implementation, the sixth elution stage includes an elution analysis stage for eluting and analyzing the interfering substance in the second specimen, which can form the interfering substance peak in the chromatographic curve by the eluting and analyzing, and an elution cleaning stage for eluting and cleaning the interfering substance in the chromatographic column 110.

In an implementation, the concentration of the second liquid in the eluent in the elution analysis stage increases linearly, i.e. the concentration of the second liquid in the eluent increases gradually.

In an implementation, the concentration of the second liquid in the eluent in the elution cleaning stage is 1, that is, the ratio of the volume of the second liquid to the total volume of the eluent is 1, and the eluent is made of the second liquid only.

In an implementation, the second operation mode further includes an eighth elution stage, which is arranged after the elution cleaning stage of the sixth elution stage and used to elute other components of the second specimen remaining in the chromatographic column 110 to avoid interference with measurement data of the next specimen.

In an implementation, a concentration of the second liquid in the eluent in the eighth elution stage is 0, that is, the volume ratio of the second liquid in the eluent is 0, and the eluent is made of the first liquid only.

In an implementation, the concentration of the second liquid in the eluent employed in the fifth elution stage is greater than the concentration of the second liquid in the eluent employed in the fourth elution stage.

In an implementation, the fourth elution stage transitions to the fifth elution stage in a time period close to the fifth elution stage with a tendency to gradually increase the concentration of the second liquid in the eluent.

In an implementation, the concentration of the second liquid in the eluent employed in the first elution stage in a time period close to the second elution stage varies to a greater extent (i.e., gradient) than the concentration of the second liquid in the eluent employed in the fourth elution stage in a time period close to the fifth elution stage. In the implementation, the concentration of the second liquid rises more slowly in the second operation mode at an end of the elution phase for the glycosylated hemoglobin, to fully present the peak of the first type of interfering substances (e.g. Gly-HbE peak).

In an implementation, the concentration of the second liquid in the eluent employed in a transition interval between the second elution stage and the third elution stage varies to a greater extent (i.e. gradient) than the concentration of the second liquid in the eluent employed in a transition interval between the fifth elution stage and the sixth elution stage, so as to prevent a variant peak from being affected by a system peak caused by a sudden concentration change on the one hand, and to differentiate multi-variant samples as much as possible on the other hand. The transition interval between the fifth elution stage and the sixth elution stage is the elution analysis stage of the sixth elution stage.

In an implementation, duration of the fifth elution stage is longer than duration of the second elution stage.

In an implementation, duration of the sixth elution stage is longer than duration of the third elution stage.

In an implementation, the first controller is further configured to control the specimen supply device 200 to supply the second specimen to the chromatographic separation device 100, and to control the chromatographic separation device 100 to elute the second specimen and to perform chromatographic analysis on the second solution to be detected that is obtained by eluting the second specimen in the second operation mode, if it is determined that there is an interfering substance in the first specimen based on the feedback information from the chromatographic separation device 100 in the first operation mode. With this control mode, an automation degree of the first sample analyzer 10 can be improved, and on the premise of ensuring the accuracy of measurement data, the user can have no sense of selecting the measurement mode during a measurement and analysis process using the first sample analyzer 10, thereby avoiding the situation that the user cannot determine which mode to use for testing when facing an unknown sample.

In an implementation, the specimen supply device 200 includes a first sample dispensing device, a first reagent dispensing device, a first reaction cell and a first specimen conveying device. The first sample dispensing device is configured to aspirate a sample from a sample container and dispense at least part of the aspirated sample into the first reaction cell. The first reagent dispensing device is configured to aspirate a reagent from a reagent container and dispense the reagent into the first reaction cell. The first reaction cell is configured to prepare the sample and the reagent into the specimen (e.g. prepare the first specimen and the second specimen as described above, respectively). The first specimen conveying device is configured to convey the specimen from the first reaction cell to the chromatographic separation device 100. The first controller is configured to control the specimen supply device 200 to supply the second specimen to the chromatographic separation device 100 by: controlling the first sample dispensing device to re-aspirate the sample from the sample container and dispense at least part of the re-aspirated sample into the first reaction cell, controlling the first reagent dispensing device to aspirate the reagent from the reagent container and dispense the reagent into the first reaction cell, controlling the first reaction cell to prepare the sample and the reagent into the second specimen, and controlling the specimen supply device 200 to supply the second specimen to the chromatographic separation device 100. It should be noted that when preparing the first specimen or the second specimen in the first reaction cell, the dispensing sequence of the sample and the reagent is not limited, that is, the first sample dispensing device can be controlled to re-aspirate the sample from the sample container and dispense at least part of the re-aspirated sample into the first reaction cell, and then the first reagent dispensing device can be controlled to aspirate the reagent from the reagent container and dispense it into the first reaction cell; and it is also possible that the first reagent dispensing device is controlled to aspirate the reagent from the reagent container and dispense the reagent into the first reaction cell, and then the first sample dispensing device is controlled to re-aspirate the sample from the sample container and dispense at least part of the re-aspirated sample into the first reaction cell.

In an implementation, the first sample analyzer 10 further includes a display. The first controller is further configured to control the display to display a display interface including at least the chromatographic curve showing the glycosylated hemoglobin peak, the non-glycosylated hemoglobin peak and the interfering substance peak (as shown in FIG. 9) after elution and chromatographic analysis of the second specimen by the chromatographic separation device 100 in the second operation mode are completed. In the implementation, after the execution of the second operation mode is completed, the chromatographic curve displayed by the display may completely display shapes and positions of the glycosylated hemoglobin peak, the non-glycosylated hemoglobin peak and the interfering substance peak.

In an implementation, the first controller is further configured to control the display to display a display interface including at least the parameter of the glycosylated hemoglobin in the second specimen and the parameter of the interfering substance in the second specimen, after the elution of the second specimen and chromatographic analysis of the second solution to be detected that is obtained after eluting the second specimen by the chromatographic separation device 100 in the second operation mode are completed. In the implementation, not only the accurate measurement data of the glycosylated hemoglobin can be obtained, but also the measurement data of the interfering substance can be obtained by adopting the second operation mode.

In an implementation, the first controller is further configured to control the display to display a display interface including at least the parameter of the glycosylated hemoglobin in the first specimen and prompt information of the presence of the interfering substance in the first specimen, if it is determined that there is the interfering substance in the first specimen based on the feedback information from the chromatographic separation device 100 in the first operation mode. In the implementation, after the completion of the first operation mode, the prompt information of the interfering substance will be displayed, which is convenient for an operator to intuitively obtain the information of the existence of the interfering substance.

In an implementation, the first controller is further configured to control the display to display a display interface including at least prompt information of the presence of the interfering substance in the first specimen and prompt information as to whether to switch to the second operation mode, if it is determined that there is the interfering substance in the first specimen based on the feedback information from the chromatographic separation device 100 in the first operation mode. The first controller is further configured to obtain an instruction for switching to the second operation mode, control the specimen supply device 200 to supply the second specimen to the chromatographic separation device 100, and control the chromatographic separation device 100 to elute the second specimen and perform chromatographic analysis on the second solution to be detected that is obtained by eluting the second specimen in the second operation mode. The prompt information as to whether to switch to the second operation mode is mainly used for prompting the operator whether to switch to the second operation mode. The instruction for switching to the second operation mode may be generated by the operator inputting information through a man-machine interaction device.

In an implementation, the first controller is further configured to control the display to display a display interface including at least the parameter of the glycosylated hemoglobin in the first specimen, if it is determined that there is no interfering substance in the first specimen based on the feedback information from the chromatographic separation device 100 in the first operation mode.

In an implementation, the first controller is further configured to control the display to display a power-on interface including at least a selectable first operation mode and a selectable second operation mode.

In an implementation, the chromatographic separation device 100 is further controlled by the first controller to elute a third specimen and perform chromatographic analysis on a third solution to be detected that is obtained by eluting the third specimen in a third operation mode. The first controller is configured to analyze feedback information from the chromatographic separation device 100 in the third operation mode to obtain a parameter of the glycosylated hemoglobin in the third specimen. Elution duration of the third specimen by the chromatographic separation device 100 in the third operation mode is shorter than that of the first specimen by the chromatographic separation device 100 in the first operation mode. The third operation mode is a glycosylated hemoglobin measurement mode which is faster than the first operation mode.

In an implementation, the first controller is further configured to control the display to display a display interface including at least a selectable first operation mode, a selectable second operation mode, and a selectable third operation mode.

In an implementation, the first controller is configured to control the chromatographic separation device 100 to supply the eluent to the chromatographic column 110 in the first operation mode, the second operation mode and the third operation mode respectively by using the same eluent supply device 120.

In an implementation, the first controller is further configured to control the eluent supply device 120 to prepare the first liquid and the second liquid into eluents containing the second liquid with different concentrations according to a first concentration control mode in the first operation mode, and to supply the eluents containing the second liquid with different concentrations to the chromatographic column 110 respectively, so as to elute the first specimen in the chromatographic column 110. The first controller is further configured to control the eluent supply device 120 to prepare the first liquid and the second liquid into eluents containing the second liquid with different concentrations according to a second concentration control mode in the second operation mode, and to supply the eluents containing the second liquid with different concentrations to the chromatographic column 110 respectively, so as to elute the second specimen in the chromatographic column 110. The first controller is further configured to control the eluent supply device 120 to prepare the first liquid and the second liquid into eluents containing the second liquid with different concentrations according to a third concentration control mode in the third operation mode, and to supply the eluents containing the second liquid with different concentrations to the chromatographic column 110 respectively, so as to elute the third specimen in the chromatographic column 110. The first concentration control mode, the second concentration control mode and the third concentration control mode are different from one another

In an implementation, the first controller is further configured to control the chromatographic separation device 100 to execute elution of the specimens in the first operation mode, the second operation mode and the third operation mode respectively by using the same chromatographic column 110. That is, the chromatographic column 110 is configured to elute the first specimen, the second specimen and the third specimen with the eluent, respectively. The first optical detection assembly 130 performs chromatographic analysis on the first solution to be detected that is obtained by eluting the first specimen in the chromatographic column 110, the second solution to be detected that is obtained by eluting the second specimen in the chromatographic column 110, and the third solution to be detected that is obtained by eluting the third specimen in the chromatographic column 110, respectively.

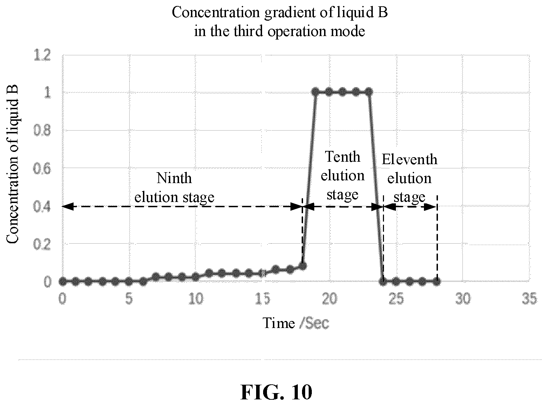

Referring to FIG. 10, in an implementation, the third operation mode includes a ninth elution stage, a tenth elution stage, and an eleventh elution stage arranged in sequence. The ninth elution stage is used for eluting and analyzing glycosylated hemoglobin in the third specimen, and the eluting and analyzing are performed to form a glycosylated hemoglobin peak in a chromatographic curve. The tenth elution stage is used for eluting and analyzing non-glycosylated hemoglobin and interfering substance in the third specimen, and the eluting and analyzing are performed to form a non-glycosylated hemoglobin peak containing the interfering substance in the chromatographic curve. The eleventh elution stage is used for eluting other components of the third specimen remaining in the chromatographic column 110 to avoid interference with measurement data of the next specimen.

In an implementation, the first controller is further configured to analyze the feedback information from the chromatographic separation device 100 to obtain the chromatographic curve in the third operation mode. The chromatographic curve obtained by analysis in the tenth elution stage shows a single wave peak.

In an implementation, a concentration of the second liquid in the eluent employed in the tenth elution stage is greater than a concentration of the second liquid in the eluent employed in the ninth elution stage and greater than a concentration of the second liquid in the eluent employed in the eleventh elution stage.

In an implementation, duration of the ninth elution stage is longer than duration of the tenth elution stage and longer than duration of the eleventh elution stage.

In an implementation, the concentration of the second liquid in the eluent in the tenth elution stage is 1, that is, the ratio of the volume of the second liquid to the total volume of the eluent is 1, and the eluent is made of the second liquid only.

In an implementation, the concentration of the second liquid in the eluent in the eleventh elution stage is 0, that is, the volume ratio of the second liquid in the eluent is 0, and the eluent is made of the first liquid only.

The embodiment provides a solution for taking into account the requirements on accuracy and speed. The fast mode (that is, the first operation mode) is fast and capable of prompting the presence of the variant. The variant mode (i.e. the second operation mode) is capable of recognizing a type of the variant and accurately reporting HbA1c.

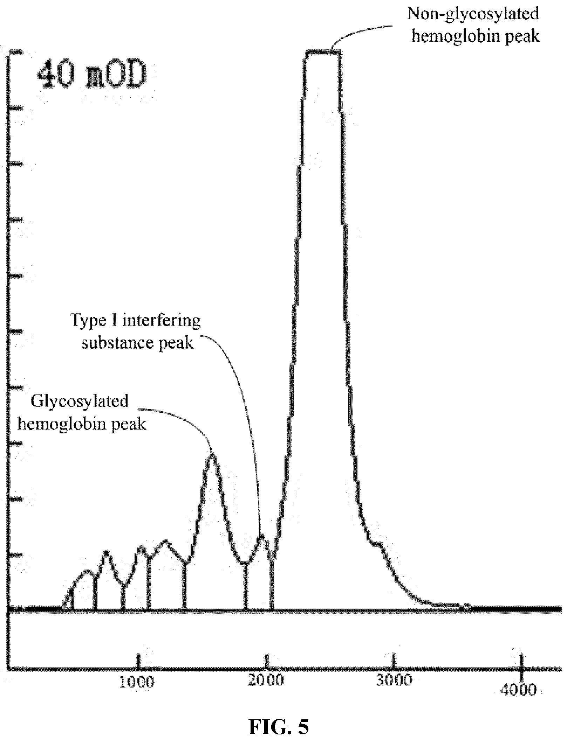

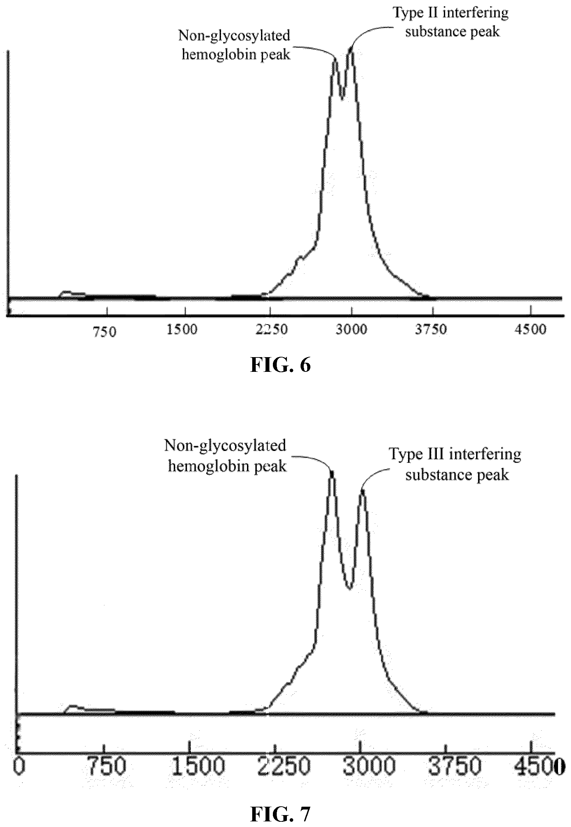

In an implementation, FIG. 5 is a chromatographic curve obtained in the first operation mode when a first type of interfering substance (e.g. the variant Gly-HbE) exists in the first specimen; FIG. 6 is a chromatographic curve obtained in the first operation mode when a second type of interfering substance (e.g. variant D) exists in the first specimen; and FIG. 7 is a chromatographic curve obtained in the first operation mode when a third type of interfering substance (e.g. variant S) exists in the first specimen.

In an implementation, an operating principle of the first sample analyzer 10 provided in the embodiment is as follows.
(1) A principle of the first operation mode is that the first operation mode is implemented by gradient elution, which specifically means that the concentration of the primary component of the eluent (i.e., the concentration of the second liquid) varies in gradients. In the first operation mode, the peaks of HbA1a, HbA1b, HbF, HbLAlc and HbSA1c are compressed by gradient elution, which saves time and keeps good resolution. The gradient elution can quickly elute Gly-HbE between HbA0 and HbLA1c. HbA0 peak is separated from HbD, HbS, HbC and other variants using an eluent with lower concentration. The variants are then quickly eluted using an eluent with high concentration (the eluent with a high concentration of the second liquid) without distinguishing the variants.
(2) A principle of the second operation mode is that the second operation mode is mainly used to accurately quantify the content and type of variants. The difference between the second operation mode and the first operation mode in elution scheme is mainly to completely show the peak shape and peak position of the variants.
(3) The difference in elution scheme between the second operation mode and the first operation mode includes: at the end of the elution stage of glycosylated hemoglobin, the concentration of the second liquid rises more slowly in the second operation mode, which is mainly for the complete presentation of Gly-HbE peak; the elution duration of HbA0 peak in the second operation mode is longer, which is mainly for complete separation of HbA0 peak from a variant peak; after that, the concentration changed slowly, so as to prevent the variant peak from being affected by a system peak caused by a sudden concentration change on the one hand, and to differentiate multi-variant samples as much as possible on the other hand.
(4) Variant prompting can be realized in the first operation mode. HbA0 can be separated from variant proteins such as HbE, HbD, HbS and HbC by gradient elution method based on the characteristics that an isoelectric point of variant proteins such as HbE, HbD, HbS and HbC exceeds 7.0, while an isoelectric point of HbA0 is about 6.9. In order to improve the measurement speed, HbE, HbD, HbS, HbC, etc. are regarded as variant groups in this embodiment, and every variant or variant combination is eluted to form a peak, that is, variant peak.

### Second Embodiment

A difference between a first sample analyzer 10 provided in this embodiment and the sample analyzer in the first embodiment mainly lies in a different protection emphasis, which is embodied in the following aspects: the first embodiment focuses on the protection of the detection results of the first operation mode and the second operation mode; whereas this embodiment focuses on the protection of a set of eluents to be made into different concentrations of eluents on-line by using the eluent supply device 120 to satisfy the demand for different concentrations of eluents.

Specifically, the first sample analyzer 10 provided in this embodiment includes a specimen supply device 200, a chromatographic separation device 100 and a first controller. The specimen supply device 200 is configured to supply at least a first specimen and a second specimen to the chromatographic separation device 100, respectively. The chromatographic separation device 100 is controlled by the first controller to elute the first specimen and perform chromatographic analysis on a first solution to be detected that is obtained by eluting the first specimen, and to elute the second specimen and perform chromatographic analysis on a second solution to be detected that is obtained by eluting the second specimen. The chromatographic separation device 100 includes a chromatographic column 110, an eluent supply device 120 and a first optical detection assembly 130. The specimen supply device 200 is configured to supply at least the first specimen and the second specimen to the chromatographic column 110, respectively. The eluent supply device 120 is controlled by the first controller to prepare a first liquid and a second liquid into an eluent, and to supply eluents containing the second liquid with different concentrations to the chromatographic column 110 respectively. The chromatographic column 110 is configured to elute the first specimen and the second specimen with the eluents respectively. The first optical detection assembly 130 is configured to perform the chromatographic analysis on the first solution to be detected that is obtained by eluting the first specimen in the chromatographic column 110 and the second solution to be detected that is obtained by eluting the second specimen in the chromatographic column 110 respectively.

In an implementation, the first controller is configured to: control the specimen supply device 200 to supply the first specimen to the chromatographic column 110; control the eluent supply device 120 to prepare the first liquid and the second liquid into the eluents containing the second liquid with different concentrations according to a first concentration control mode and to supply the eluents containing the second liquid with different concentrations to the chromatographic column 110 respectively, so as to elute the first specimen in the chromatographic column 110; and control the first optical detection assembly 130 to perform the chromatographic analysis on the first solution to be detected that is obtained in the chromatographic column 110. The first controller is further configured to: in response to determining that there is an interfering substance in the first specimen based on feedback information from the chromatographic separation device 100, control the specimen supply device 200 to supply the second specimen to the chromatographic separation device 100; control the eluent supply device 120 to prepare the first liquid and the second liquid into the eluents containing the second liquid with different concentrations according to a second concentration control mode, and to supply the eluents containing the second liquid with different concentrations to the chromatographic column 110 respectively, so as to elute the second specimen in the chromatographic column 110; and control the first optical detection assembly 130 to perform the chromatographic analysis on the second solution to be detected that is obtained in the chromatographic column 110. The first concentration control mode is different from the second concentration control mode.

In an implementation, the eluent supply device 120 includes a mixing component 121, a first infusion power component 122 and a second infusion power component 123. The first infusion power component 122 is configured to deliver the first liquid from a first container 124 to the mixing component 121. The second infusion power component 123 is configured to deliver the second liquid from a second container 125 to the mixing component 121. The mixing component 121 is configured to supply the eluents formed by at least one of the first liquid and the second liquid to the chromatographic column 110. The first controller is further configured to control the mixing component 121 to supply the eluents containing the second liquid with different concentrations to the chromatographic column 110 by controlling operating parameters of the first infusion power component 122 and the second infusion power component 123, respectively.

In an implementation, duration in which the eluent supply device 120 supplies the eluent to the chromatographic column 110 according to the first concentration control mode is shorter than duration in which the eluent supply device 120 supplies the eluent to the chromatographic column 110 according to the second concentration control mode.

In an implementation, the eluent supply device 120 supplies the eluent to the chromatographic column 110 according to the first concentration control mode during a first elution stage, a second elution stage and a third elution stage arranged in sequence, and the eluent supply device 120 supplies the eluent to the chromatographic column 110 according to the second concentration control mode during a fourth elution stage, a fifth elution stage and a sixth elution stage arranged in sequence. The first elution stage and the fourth elution stage are used for eluting and analyzing glycosylated hemoglobin in the first specimen and glycosylated hemoglobin in the second specimen respectively. The second elution stage and the fifth elution stage are used for eluting and analyzing non-glycosylated hemoglobin in the first specimen and non-glycosylated hemoglobin in the second specimen respectively. The third elution stage is used for eluting and analyzing an interfering substance in the first specimen. The sixth elution stage is used for eluting and analyzing an interfering substance in the second specimen.

In an implementation, a concentration of the second liquid in an eluent used in the third elution stage is greater than a concentration of the second liquid in an eluent used in the first elution stage and greater than a concentration of the second liquid in an eluent used in the second elution stage.

In an implementation, a concentration of the second liquid in an eluent used in the sixth elution stage is greater than a concentration of the second liquid in an eluent used in the fourth elution stage and greater than a concentration of the second liquid in an eluent used in the fifth elution stage. The eluents are prepared from at least one of the first liquid and the second liquid, and an ionic strength of the first liquid is less than an ionic strength of the second liquid.

In an implementation, the concentration of the second liquid in the eluent used in the second elution stage is greater than the concentration of the second liquid in the eluent used in the first elution stage.

In an implementation, the concentration of the second liquid in the eluent used in the fifth elution stage is greater than the concentration of the second liquid in the eluent used in the fourth elution stage.

In an implementation, the first elution stage transitions to the second elution stage in a time period close to the second elution stage with a tendency to gradually increase the concentration of the second liquid in the eluent, and the fourth elution stage transitions to the fifth elution stage in a time period close to the fifth elution stage with a tendency to gradually increase the concentration of the second liquid in the eluent. The concentration of the second liquid in the eluent used in the time period, close to the second elution stage, in the first elution stage varies to a greater extent than the concentration of the second liquid in the eluent used in the time period, close to the fifth elution stage, in the fourth elution stage.

In an implementation, a concentration of the second liquid in an eluent used in a transition interval between the second elution stage and the third elution stage varies to a greater extent than a concentration of the second liquid in an eluent used in a transition interval between the fifth elution stage and the sixth elution stage.

In an implementation, duration of the fifth elution stage is longer than duration of the second elution stage.

In an implementation, duration of the sixth elution stage is longer than duration of the third elution stage.

In an implementation, duration of the first elution stage is longer than duration of the second elution stage and longer than duration of the third elution stage.

In an implementation, the sample analyzer further includes a display. The first controller is further configured to control the display to display a display interface including at least a chromatographic curve showing a glycosylated hemoglobin peak, a non-glycosylated hemoglobin peak and an interfering substance peak, after elution of the second specimen using the eluent made in the second concentration control mode and chromatographic analysis of the second solution to be detected that is obtained by eluting the second specimen by the chromatographic separation device 100 are completed.

In an implementation, the first controller is further configured to control the display to display a display interface including at least a parameter of glycosylated hemoglobin in the second specimen and a parameter of an interfering substance in the second specimen, after elution of the second specimen using the eluent made in the second concentration control mode and chromatographic analysis of the second solution to be detected that is obtained by eluting the second specimen by the chromatographic separation device 100 are completed.

Other parts and operating principles of the first sample analyzer 10 provided in this embodiment may be referred to the first embodiment and will not be described in detail here.

### Third Embodiment

A difference between a first sample analyzer 10 provided in this embodiment and the sample analyzer in the first embodiment mainly lies in a different protection emphasis, which is embodied in the following aspects: the first embodiment focuses on the protection of the detection results of the first operation mode and the second operation mode; whereas this embodiment focuses on the protection of using the same chromatographic column 110 to perform the elution of the specimen in the first and second operation modes respectively, and using the same eluent supply device 120 to supply the eluents to the chromatographic column 110 in the first and second operation modes respectively.

Specifically, the sample analyzer provided in this embodiment includes a specimen supply device 200, a chromatographic separation device 100 and a first controller. The specimen supply device 200 is configured to convey a first specimen to the chromatographic separation device 100. The chromatographic separation device 100 is controlled by the first controller to elute and perform chromatographic analysis on the first specimen in a first operation mode, and to elute and perform chromatographic analysis on the first specimen in a second operation mode. The chromatographic separation device 100 includes a chromatographic column 110, an eluent supply device 120 and a first optical detection assembly 130. The specimen supply device 200 is configured to supply at least the first specimen and a second specimen to the chromatographic column 110 respectively. The eluent supply device 120 is configured to convey eluents to the chromatographic column 110. The chromatographic column 110 is configured to elute the first specimen with the eluent and elute the second specimen with the eluent. The first optical detection assembly 130 is configured to perform chromatographic analysis on a first solution to be detected that is obtained by eluting the first specimen in the chromatographic column 110 and perform chromatographic analysis on a second solution to be detected that is obtained by eluting the second specimen in the chromatographic column 110. The first controller is further configured to control the chromatographic separation device 100 to elute the first specimen in the first operation mode and elute the second specimen in the second operation mode, using the same chromatographic column 110, respectively, and to control the chromatographic separation device 100 to supply the eluents to the chromatographic column 110 in the first operation mode and the second operation mode, using the same eluent supply device 120, respectively. The embodiment can reduce the quantity of materials and the cost of materials while maintaining both the measuring speed and accuracy.

In an implementation, the eluent supply device 120 includes a mixing component 121, a first infusion power component 122 for conveying a first liquid from a first container 124 to the mixing component 121, and a second infusion power component 12 for conveying a second liquid from a second container 125 to the mixing component 121. The mixing component 121 is configured to prepare the first liquid and/or the second liquid into the eluents and to supply the eluents to the chromatographic column 110.

In an implementation, the first controller is further configured to control the mixing component 121 to supply the eluents containing the second liquid with different concentrations to the chromatographic column by controlling operating parameters of the first infusion power component 122 and the second infusion power component 123 respectively.

Other parts and operating principles of the first sample analyzer 10 provided in this embodiment can be referred to the first embodiment and will not be described in detail here.

### Fourth Embodiment

A difference between a first sample analyzer 10 provided in this embodiment and the sample analyzer in the first embodiment mainly lies in a different protection emphasis, which is embodied in the following aspects: the first embodiment focuses on the protection of the detection results of the first operation mode and the second operation mode; whereas this embodiment focuses on the protection of preparing a set of eluent stock solution formed by the first liquid and the second liquid into eluents used in different operation modes online by adopting different concentration control modes in the first operation mode and the second operation mode respectively.

Specifically, the first sample analyzer 10 provided in this embodiment includes a specimen supply device 200, a chromatographic separation device 100 and a first controller. The specimen supply device 200 is configured to supply at least a first specimen and a second specimen to the chromatographic separation device 100 respectively. The chromatographic separation device 100 is controlled by the first controller to elute the first specimen and perform chromatographic analysis on a first solution to be detected that is obtained by eluting the first specimen in a first operation mode, and to elute the second specimen and perform chromatographic analysis on a second solution to be detected that is obtained by eluting the second specimen in a second operation mode. The chromatographic separation device 100 includes a chromatographic column 110, an eluent supply device 120 and a first optical detection assembly 130. The specimen supply device 200 is configured to convey the first specimen and the second specimen to the chromatographic column 110 respectively. The eluent supply device 120 is controlled by the first controller to prepare an eluent from a first liquid and a second liquid and convey eluents containing the second liquid with different concentrations to the chromatographic column 110. The chromatographic column 110 is configured to elute the first specimen and the second specimen with the eluents respectively. The first optical detection assembly 130 is configured to perform the chromatographic analysis on the first solution to be detected and the second solution to be detected eluted in the chromatographic column 110 respectively. The first controller is further configured to control the eluent supply device 120 to prepare the first liquid and the second liquid into the eluents containing the second liquid with different concentrations according to a first concentration control mode in the first operation mode, and to supply the eluents containing the second liquid with different concentrations to the chromatographic column 110 respectively to elute the first specimen in the chromatographic column 110. The first controller is further configured to control the eluent supply device 120 to prepare the first liquid and the second liquid into eluents containing the second liquid with different concentrations according to a second concentration control mode in the second operation mode, and to supply the eluents containing the second liquid with different concentrations to the chromatographic column 110 respectively to elute the second specimen in the chromatographic column 110. The first concentration control mode is different from the second concentration control mode. In this embodiment, a set of eluent stock solution formed by the first liquid and the second liquid is prepared online into eluents used in different operation modes by adopting different concentration control modes, which has less materials and low material cost, and can give attention to measurement speed and measurement accuracy respectively by adopting different operation modes.

In an implementation, there is one chromatographic columns 110, and the first controller is configured to control the chromatographic separation device 100 to elute the first specimen in the first operation mode and elute the second specimen in the second operation mode, using the same chromatographic column 110, respectively, and to control the chromatographic separation device 100 to supply the eluents to the chromatographic columns 110 in the first operation mode and the second operation mode, using the same eluent supply device 120, respectively.

In an implementation, the eluent supply device 120 includes a mixing component 121, a first infusion power component 122 for conveying the first liquid from a first container 124 to the mixing component 121, and a second infusion power component 123 for conveying the second liquid from a second container 125 to the mixing component 121. The mixing component 121 is configured to prepare the first liquid and/or the second liquid into the eluents and to supply the eluents to the chromatographic column 110.

In an implementation, the first controller is further configured to control the mixing component 121 to supply the eluents containing the second liquid with different concentrations to the chromatographic column by controlling operating parameters of the first infusion power component 122 and the second infusion power component 123 respectively.

Other parts and operating principles of the first sample analyzer 10 provided in this embodiment can be referred to the first embodiment and will not be described in detail here.

### Fifth embodiment

A difference between a first sample analyzer 10 provided in this embodiment and the sample analyzer in the first embodiment mainly lies in a different protection emphasis, which is embodied in the following aspects: the first embodiment focuses on the protection of the detection results of the first operation mode and the second operation mode; whereas the embodiment focuses on the protection of automatically switch to the second operation mode from the first operation mode when an interfering substance is detected in the first operation mode.

Specifically, the first sample analyzer 10 provided in this embodiment includes a specimen supply device 200, a chromatographic separation device 100 and a first controller. The specimen supply device 200 is configured to supply at least a first specimen and a second specimen to the chromatographic separation device 100 respectively. The chromatographic separation device 100 is controlled by the first controller to elute the first specimen and performing chromatographic analysis on a first solution to be detected that is obtained by eluting the first specimen in a first operation mode, and to elute the second specimen and perform chromatographic analysis on a second solution to be detected that is obtained by eluting the second specimen in a second operation mode. The first controller is configured to: in response to determining that there is an interfering substance in the first specimen based on feedback information from the chromatographic separation device 100 in the first operation mode, control the specimen supply device 200 to supply the second specimen to the chromatographic separation device 100, and to control the chromatographic separation device 100 to elute the second specimen and to perform the chromatographic analysis on the second solution to be detected that is obtained by eluting the second specimen in the second operation mode. The first sample analyzer 10 provided in this embodiment automatically switches to the second operation mode when the interfering substance is detected in the first operation mode without the participation of an operator.

Other parts and operating principles of the first sample analyzer 10 provided in this embodiment can be referred to the first embodiment and will not be described in detail here.

### Sixth embodiment

A first sample analyzer 10 provided in this embodiment differs from the first sample analyzer 10 in the fifth embodiment mainly in that the mode of switching to the second operation mode is different when the interfering substance is detected in the first operation mode. Specifically, in the fifth embodiment, when the interfering substance is detected in the first operation mode, the second operation mode is automatically switched; whereas in the present embodiment, when the interfering substance is detected in the first operation mode, the operator is prompted, and when information input by the operator for switching to the second operation mode is received, the second operation mode is switched.

Specifically, the first sample analyzer 10 provided in this embodiment includes a specimen supply device 200, a chromatographic separation device 100, a display and a first controller. The specimen supply device 200 is configured to supply at least a first specimen and a second specimen to the chromatographic separation device 100 respectively. The chromatographic separation device 100 is controlled by the first controller to elute the first specimen and perform chromatographic analysis on a first solution to be detected that is obtained by eluting the first specimen in a first operation mode, and to elute the second specimen and perform chromatographic analysis on a second solution to be detected that is obtained by eluting the second specimen in a second operation mode. The first controller is configured to: in response to determining that there is the interfering substance in the first specimen based on feedback information from the chromatographic separation device 100 in the first operation mode, control the display to display a display interface including at least prompt information of presence of an interfering substance in the first specimen and prompt information as to whether to switch to the second operation mode. The first controller is further configured to: obtain an instruction for switching to the second operation mode, control the specimen supply device 200 to supply the second specimen to the chromatographic separation device 100, and control the chromatographic separation device 100 to elute the second specimen and perform the chromatographic analysis on the second solution to be detected that is obtained by eluting the second specimen in the second operation mode. In the first sample analyzer 10 provided in this embodiment, when an interfering substance is detected in the first operation mode, an operator is required to operate the first sample analyzer 10 before switching to the second operation mode.

Other parts and operating principles of the first sample analyzer 10 provided in this embodiment can be referred to the first embodiment and will not be described in detail here.

### Seventh embodiment not being part of the invention

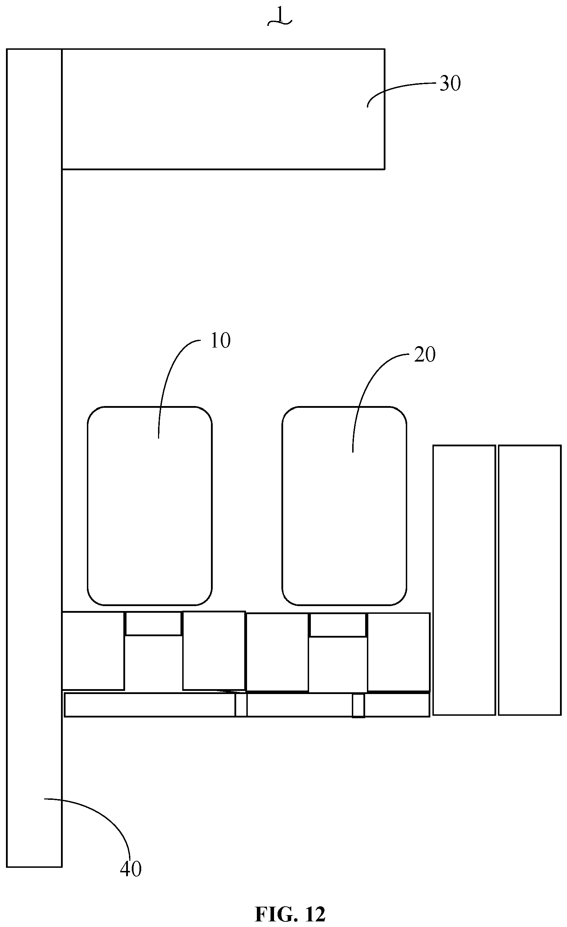

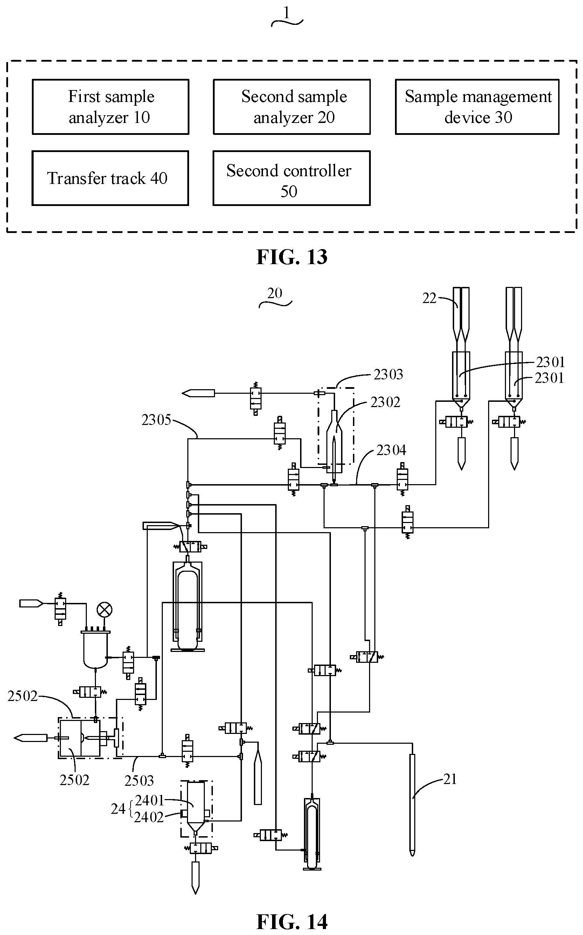

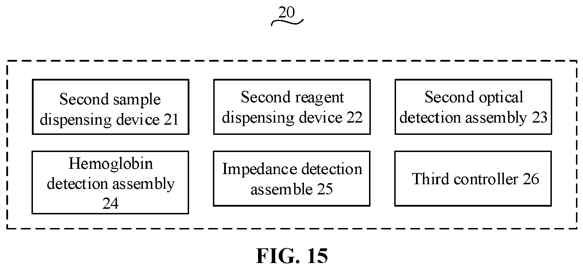

Referring to FIGS. 1 to 3 and FIGS. 12 to 15, a difference between the present embodiment and the first embodiment mainly lies in different application scenarios of glycosylated hemoglobin measurement. Specifically, the first embodiment is applied to a single glycosylated hemoglobin analyzer; whereas the present embodiment is applied to the scenario of a cascade system or an assembly line having a glycosylated hemoglobin analyzer.

Specifically, the present embodiment provides a sample analysis system 1 including a sample management device 30, a first sample analyzer 10, a second sample analyzer 20, a transfer track 40 and a second controller 50. The sample management device 30 is configured to at least place a sample container loaded with a sample to realize the feeding of the sample. The first sample analyzer 10 is configured to aspirate the sample from the sample container to perform a glycosylated hemoglobin test item. The second sample analyzer 20 is configured to aspirate the sample from the sample container to perform a blood routine test item. The transfer track 40 extends from the sample management device 30 to the first sample analyzer 10 and the second sample analyzer 20. The second controller 50 is configured to control the transfer track 40 to transfer the sample container to the first sample analyzer 10 and/or the second sample analyzer 20. In a specific application, an operator or an operating robot may place the sample container loaded with the sample on the sample management device 30 for loading, and the second controller 50 may control the transfer track 40 to transfer the sample output from the sample management device 30 to the first sample analyzer 10 and/or the second sample analyzer 20 for aspirating. The sample analysis system 1 provided by the embodiment integrates the blood routine test function and the glycosylated hemoglobin test function, which is beneficial to simultaneously realize the testing of the blood routine test item and the glycosylated hemoglobin test item through one tube of blood, thereby reducing the sample requirement.

In an implementation, the sample management device 30 is provided with an information acquisition component for identifying an identification code of the sample container and/or an appearance feature of the sample container. The second controller 50 is configured to control the transfer track 40 to transfer the sample container to the first sample analyzer 10 and/or the second sample analyzer 20 for aspirating based on feedback information from the information acquisition component. Specifically, the second controller 50 is configured to determine a type of item to be detected for the sample in the sample container based on the feedback information from the information acquisition component, and control the transfer track 40 to transfer the sample container to the first sample analyzer 10 and/or the second sample analyzer 20 for aspirating according to the type of the item to be detected for the sample in the sample container. In the embodiment, the sample analysis system 1 automatically dispatches the sample container to the corresponding analyzer to aspirate sample by automatically identifying the sample container, without any operation by an operator, so that the operator can basically have no sense of sorting and dispatching the sample, and the automation degree of the sample analysis system 1 is improved.

In an implementation, the first sample analyzer 10 includes a specimen supply device 200, a chromatographic separation device 100 and a first controller. The specimen supply device 200 is configured to aspirate the sample from the sample container to prepare a first specimen and supply the first specimen to the chromatographic separation device 100. The chromatographic separation device 100 is controlled by the first controller to elute the first specimen and perform chromatographic analysis on a first solution to be detected that is obtained by eluting the first specimen in a first operation mode, and to elute a second specimen and perform chromatographic analysis on a second solution to be detected that is obtained by eluting the second specimen in a second operation mode. The first controller is configured to analyze feedback information from the chromatographic separation device 100 in the first operation mode to obtain a parameter of glycosylated hemoglobin in the first specimen and a conclusion as to whether there is an interfering substance in the first specimen. The first controller is further configured to analyze feedback information from the chromatographic separation device 100 in the second operation mode to obtain a parameter of glycosylated hemoglobin in the second specimen and a parameter of an interfering substance in the second specimen.

In an implementation, the chromatographic separation device 100 includes a chromatographic column 110, an eluent supply device 120, and a first optical detection assembly 130. The specimen supply device 200 is configured to supply at least the first specimen and the second specimen to the chromatographic column 110, respectively. The eluent supply device 120 is controlled by the first controller to prepare a first liquid and a second liquid into an eluent, and to supply eluents containing the second liquid with different concentrations to the chromatographic column 110 respectively. The chromatographic column 110 is configured to elute the first specimen and the second specimen with the eluents respectively. The first optical detection assembly 130 is configured to perform the chromatographic analysis on the first solution to be detected and the second solution to be detected eluted from the chromatographic column respectively. The first controller is further configured to control the eluent supply device 120 to prepare the first liquid and the second liquid into the eluents containing the second liquid with different concentrations according to a first concentration control mode in the first operation mode, and to supply the eluents containing the second liquid with different concentrations to the chromatographic column 110 respectively, so as to elute the first specimen in the chromatographic column 110. The first controller is further configured to control the eluent supply device 120 to prepare the first liquid and the second liquid into the eluents containing the second liquid with different concentrations according to a second concentration control mode in the second operation mode, and to supply the eluents containing the second liquid with different concentrations to the chromatographic column 110 respectively, so as to elute the second specimen in the chromatographic column 110. The first concentration control mode is different from the second concentration control mode.

In an implementation, the first controller is further configured to control the chromatographic separation device 100 to elute the first specimen in the first operation mode and elute the second specimen in the second operation mode, using the same chromatographic column 110, respectively.

In an implementation, elution duration of the first specimen by the chromatographic separation device 100 in the first operation mode is shorter than that of the second specimen by the chromatographic separation device 100 in the second operation mode.

In an implementation, the first controller is further configured to: in response to determining that there is an interfering substance in the first specimen based on the feedback information from the chromatographic separation device 100 in the first operation mode, control the specimen supply device 200 to supply the second specimen to the chromatographic separation device 100, and to control the chromatographic separation device 100 to elute the second specimen and to perform the chromatographic analysis on the second solution to be detected that is obtained by eluting the second specimen in the second operation mode.

In an implementation, the specimen supply device 200 includes a first sample dispensing device, a first reagent dispensing device, a first reaction cell and a first specimen conveying device. The first sample dispensing device is configured to aspirate the sample from the sample container and dispense at least part of the aspirated sample into the first reaction cell. The first reagent dispensing device is configured to aspirate a reagent from a reagent container and dispense the aspirated reagent into the first reaction cell. The first reaction cell is configured to prepare the sample and the reagent into a specimen. The first specimen conveying device is configured to convey the specimen from the first reaction cell to the chromatographic separation device 100. The first controller is configured to control the specimen supply device 200 to supply the second specimen to the chromatographic separation device 100 by: controlling the first sample dispensing device to re-aspirate the sample from the sample container and dispense at least part of the re-aspirated sample into the first reaction cell, controlling the first reagent dispensing device to aspirate the reagent from the reagent container and dispense the aspirated reagent into the first reaction cell, controlling the first reaction cell to prepare the sample and the reagent into the second specimen, and controlling the specimen supply device 200 to supply the second specimen to the chromatographic separation device 100.

In an implementation, the first sample analyzer 10 further includes a display. The first controller is further configured to control the display to display a display interface including at least a chromatographic curve showing a glycosylated hemoglobin peak, a non-glycosylated hemoglobin peak and an interfering substance peak, after elution of the second specimen and chromatographic analysis of the second solution to be detected that is obtained by eluting the second specimen by the chromatographic separation device 100 in the second operation mode are completed.

In an implementation, the first controller is further configured to: in response to determining that there is the interfering substance in the first specimen based on the feedback information from the chromatographic separation device 100 in the first operation mode, control the display to display a display interface including at least the parameter of the glycosylated hemoglobin in the first specimen and prompt information of presence of the interfering substance in the first specimen.

In an implementation, the first controller is further configured to: in response to determining that there is no interfering substance in the first specimen based on the feedback information from the chromatographic separation device 100 in the first operation mode, control the display to display a display interface including at least the parameter of the glycosylated hemoglobin in the first specimen.

In an implementation, the first controller is further configured to: in response to determining that there is the interfering substance in the first specimen based on the feedback information from the chromatographic separation device 100 in the first operation mode, control the display to display a display interface including at least prompt information of presence of the interfering substance in the first specimen and prompt information as to whether to switch to the second operation mode. The first controller is further configured to: obtain an instruction for switching to the second operation mode, control the specimen supply device 200 to supply the second specimen to the chromatographic separation device 100, and control the chromatographic separation device 100 to elute the second specimen and perform the chromatographic analysis on the second solution to be detected that is obtained by eluting the second specimen in the second operation mode.

In an implementation, the chromatographic separation device 100 is further controlled by the first controller to elute a third specimen and perform chromatographic analysis on a third solution to be detected that is obtained by eluting the third specimen in a third operation mode. The first controller is further configured to analyze feedback information from the chromatographic separation device 100 in the third operation mode to obtain a parameter of glycosylated hemoglobin in the third specimen. An elution time of the third specimen by the chromatographic separation device 100 in the third operation mode is shorter than that of the first specimen by the chromatographic separation device 100 in the first operation mode.

In an implementation, the first sample dispensing device includes a first sample needle, a first motion drive component for driving the first sample needle to move, and a first aspiration and discharge drive component for driving the first sample needle to aspirate and discharge the sample.

In an implementation, the second sample analyzer 20 includes a second sample dispensing device 21, a second reagent dispensing device 22 and a measurement assembly. The second sample dispensing device 21 is configured to aspirate the sample from the sample container and dispense the aspirated sample to the measurement assembly. The second reagent dispensing device 22 is configured to dispense the reagent to the measurement assembly. The measurement assembly is configured to measure at least the second specimen made of the sample dispensed by the first sample dispensing device and the reagent dispensed by the reagent dispensing device.

In an implementation, the measurement assembly of the second sample analyzer 20 includes a second optical detection assembly 23 for leukocyte classification count detection and reticulocyte count detection, a hemoglobin detection assembly 24 for hemoglobin concentration detection, and an impedance detection assembly 25 for red blood cell and platelet detection. The second optical detection assembly 23 includes a second reaction cell 2301, a flow chamber 2302, an optical detection component 2303, a first sample preparation pipeline 2304 and a sheath liquid pipeline 2305. The first sample preparation pipeline 2304 is connected between the second reaction cell 2301 and the flow chamber 2302 and configured to push a fourth specimen made of the sample and the reagent in the second reaction cell 2301 to the flow chamber 2302, and the sheath liquid pipeline 2305 is configured to convey a sheath liquid to the flow chamber 2302. The flow chamber 2302 has a detection area, and cells to be detected in the fourth specimen for leukocyte or reticulocyte detection are lined up and passed through the detection area under the sheath fluid. The optical detection component 2303 is configured to perform leukocyte classification counting detection or reticulocyte counting detection on the specimen carried by the sheath fluid and passing through the detection area of the flow chamber 2302, and obtain a detection result of the leukocyte or reticulocyte based on a scattered light signal and/or a fluorescence signal. The hemoglobin detection assembly 24 includes a hemoglobin detection cell 2401 and a hemoglobin detection element 2402, and the impedance detection assembly 25 includes an impedance detection cell 2501, an impedance detector 2502, and a second sample preparation pipeline 2503 connected between the hemoglobin detection cell 2401 and the impedance detection cell 2501. The hemoglobin detection cell 2401 is used as a preparation unit for an impedance counting detection sample in addition to a preparation unit and a detection unit for a hemoglobin detection sample. In a specific operation, the sample can be added into the hemoglobin detection cell 2401 and reacted with diluent to prepare an impedance counting detection specimen, and then part of the impedance counting detection specimen is pumped away. Then, the reagent is added to the hemoglobin detection cell 2401 to prepare a hemoglobin detection specimen. The second sample dispensing device 21 is configured to dispense the sample from the sample container and dispense the sample to the second reaction cell 2301 and the hemoglobin detection cell 2401.

In an implementation, the optical detection component 2303 includes a light source, a forward scattering light signal collecting means, a lateral scattering light signal collecting means and a fluorescence signal collecting means. The light source is configured to emit light toward the cells to be detected flowing through the flow chamber 2302. The forward scattering light signal collecting means is configured to collect a forward scattering signal generated by the light source irradiating the cell to be detected, and the forward scattering signal (also called a low angle scattering signal) collected by the forward scattering light signal collecting means may characterize a volume of the cell to be detected. The lateral scattering light signal collecting means is configured to collect a lateral scattering signal generated by the light source irradiating the cell to be detected. The lateral scattering signal collecting means is arranged at a lateral side of an optical axis of the light emitted by the light source, and the collected lateral scattering signal (also called a high angle scattering signal) may characterize a complexity of particles in the cell to be detected. The fluorescence signal collecting means is configured to collect a fluorescence signal generated by the light source irradiating the cell to be detected. The fluorescence signal collecting means is arranged at the lateral side of the optical axis of the light emitted by the light source, and an intensity of the collected fluorescence signal may characterize a degree of staining of the cell to be detected.

In an implementation, the second sample dispensing device 21 includes a second sample needle, a second motion drive component for driving the second sample needle to move, and a second aspiration and discharge drive component for driving the second sample needle to aspirate and discharge the sample.

In an implementation, the second sample analyzer 20 further includes a third controller 26 for controlling the operation of the second sample dispensing device 21, the second reagent dispensing device 22, the second optical detection assembly 23, the hemoglobin detection assembly 24, and the impedance detection assembly 25.

In an implementation, there may be one or multiple first sample analyzers 10 and second sample analyzers 20.

Other parts and operating principles of the sample analysis system 1 provided in this embodiment can be referred to the first embodiment to the sixth embodiment, and will not be described in detail here.

The invention provides a sample analyzer including a specimen supply device, a chromatographic separation device and a first controller.

The specimen supply device is configured to supply at least a first specimen and a second specimen to the chromatographic separation device, respectively.

The chromatographic separation device is controlled by the first controller to elute the first specimen and perform chromatographic analysis on a first solution to be detected that is obtained by eluting the first specimen in a first operation mode, and to elute the second specimen and perform chromatographic analysis on a second solution to be detected that is obtained by eluting the second specimen in a second operation mode.

The first controller is configured to analyze feedback information from the chromatographic separation device in the first operation mode to obtain a parameter of glycosylated hemoglobin in the first specimen and a conclusion as to whether there is an interfering substance in the first specimen.

The first controller is further configured to analyze feedback information from the chromatographic separation device in the second operation mode to obtain a parameter of glycosylated hemoglobin in the second specimen and a parameter of an interfering substance in the second specimen.

In an implementation, the chromatographic separation device includes a chromatographic column, an eluent supply device and a first optical detection assembly.

The specimen supply device is configured to supply at least the first specimen and the second specimen to the chromatographic column, respectively.

The eluent supply device is controlled by the first controller to prepare a first liquid and a second liquid into an eluent, and to supply eluents containing the second liquid with different concentrations to the chromatographic column respectively.

The chromatographic column is configured to elute the first specimen and the second specimen with the eluents respectively.

The first optical detection assembly is configured to perform the chromatographic analysis on the first solution to be detected that is obtained by eluting the first specimen in the chromatographic column and the second solution to be detected that is obtained by eluting the second specimen in the chromatographic column respectively.

The first controller is further configured to control the eluent supply device to prepare the first liquid and the second liquid into the eluents containing the second liquid with different concentrations according to a first concentration control mode in the first operation mode, and to supply the eluents containing the second liquid with different concentrations to the chromatographic column respectively, so as to elute the first specimen in the chromatographic column.

The first controller is further configured to control the eluent supply device to prepare the first liquid and the second liquid into the eluents containing the second liquid with different concentrations according to a second concentration control mode in the second operation mode, and to supply the eluents containing the second liquid with different concentrations to the chromatographic column respectively, so as to elute the second specimen in the chromatographic column.

The first concentration control mode is different from the second concentration control mode.

In an implementation, the first controller is further configured to control the chromatographic separation device to elute the first specimen in the first operation mode and elute the second specimen in the second operation mode, using the same chromatographic column.

In an implementation, the eluent supply device includes a mixing component, a first infusion power component and a second infusion power component.

The first infusion power component is configured to deliver the first liquid from a first container to the mixing component.

The second infusion power component is configured to deliver the second liquid from a second container to the mixing component.

The mixing component is configured to supply the eluents formed by at least one of the first liquid and the second liquid to the chromatographic column.

The first controller is further configured to control the mixing component to supply the eluents containing the second liquid with different concentrations to the chromatographic column by controlling operating parameters of the first infusion power component and the second infusion power component, respectively.

In an implementation, elution duration of the first specimen by the chromatographic separation device in the first operation mode is shorter than that of the second specimen by the chromatographic separation device in the second operation mode.

In an implementation, the first operation mode includes a first elution stage, a second elution stage and a third elution stage arranged in sequence, and the second operation mode includes a fourth elution stage, a fifth elution stage and a sixth elution stage arranged in sequence.

The first elution stage and the fourth elution stage are used for eluting and analyzing the glycosylated hemoglobin in the first specimen and the glycosylated hemoglobin in the second specimen respectively. The second elution stage and the fifth elution stage are used for eluting and analyzing non-glycosylated hemoglobin in the first specimen and non-glycosylated hemoglobin in the second specimen respectively. The third elution stage is used for eluting and analyzing the interfering substance in the first specimen. The sixth elution stage is used for eluting and analyzing the interfering substance in the second specimen.

A concentration of the second liquid in an eluent used in the third elution stage is greater than a concentration of the second liquid in an eluent used in the first elution stage and greater than a concentration of the second liquid in an eluent used in the second elution stage.

A concentration of the second liquid in an eluent used in the sixth elution stage is greater than a concentration of the second liquid in an eluent used in the fourth elution stage and greater than a concentration of the second liquid in an eluent used in the fifth elution stage.

The eluents are prepared from at least one of the first liquid and the second liquid, and an ionic strength of the first liquid is less than an ionic strength of the second liquid.

In an implementation, the concentration of the second liquid in the eluent used in the second elution stage is greater than the concentration of the second liquid in the eluent used in the first elution stage.

The concentration of the second liquid in the eluent used in the fifth elution stage is greater than the concentration of the second liquid in the eluent used in the fourth elution stage.

In an implementation, the first elution stage transitions to the second elution stage in a time period close to the second elution stage with a tendency to gradually increase the concentration of the second liquid in the eluent, and the fourth elution stage transitions to the fifth elution stage in a time period close to the fifth elution stage with a tendency to gradually increase the concentration of the second liquid in the eluent.

The concentration of the second liquid in the eluent used in the time period, close to the second elution stage, in the first elution stage varies to a greater extent than the concentration of the second liquid in the eluent used in the time period, close to the fifth elution stage, in the fourth elution stage.

In an implementation, a concentration of a second liquid in an eluent used in a transition interval between the second elution stage and the third elution stage varies to a greater extent than a concentration of the second liquid in an eluent used in a transition interval between the fifth elution stage and the sixth elution stage.

In an implementation, duration of the fifth elution stage is longer than duration of the second elution stage; and/or, duration of the sixth elution stage is longer than duration of the third elution stage.

In an implementation, duration of the first elution stage is longer than duration of the second elution stage and longer than duration of the third elution stage.

In an implementation, the first controller is further configured to analyze the feedback information from the chromatographic separation device to obtain a chromatographic curve in the first operation mode, and to determine that there is an interfering substance in the first specimen when more than two peaks are formed in the chromatographic curve obtained in the second elution stage and the third elution stage; and/or, the first controller is further configured to analyze the feedback information from the chromatographic separation device to obtain a chromatographic curve in the second operation mode. The chromatographic curve obtained in the fifth elution stage and the sixth elution stage shows more than two peaks.

In an implementation, the first controller is further configured to: in response to determining that there is an interfering substance in the first specimen based on the feedback information from the chromatographic separation device in the first operation mode, control the specimen supply device to supply the second specimen to the chromatographic separation device, and to control the chromatographic separation device to elute the second specimen and to perform the chromatographic analysis on the second solution to be detected that is obtained by eluting the second specimen in the second operation mode.

In an implementation, the specimen supply device includes a first sample dispensing device, a first reagent dispensing device, a first reaction cell and a first specimen conveying device. The first sample dispensing device is configured to aspirate a sample from a sample container and dispense at least part of the aspirated sample into the first reaction cell. The first reagent dispensing device is configured to aspirate a reagent from a reagent container and dispense the aspirated reagent into the first reaction cell. The first reaction cell is configured to prepare the sample and the reagent into a specimen. The first specimen conveying device is configured to convey the specimen from the first reaction cell to the chromatographic separation device.

The first controller is configured to control the specimen supply device to supply the second specimen to the chromatographic separation device by: controlling the first sample dispensing device to re-aspirate the sample from the sample container and dispense at least part of the re-aspirated sample into the first reaction cell, controlling the first reagent dispensing device to aspirate the reagent from the reagent container and dispense the aspirated reagent into the first reaction cell, controlling the first reaction cell to prepare the sample and the reagent into the second specimen, and controlling the first specimen conveying device to supply the prepared second specimen to the chromatographic separation device.

In an implementation, the sample analyzer further includes a display.

The first controller is further configured to control the display to display a display interface including at least a chromatographic curve showing a glycosylated hemoglobin peak, a non-glycosylated hemoglobin peak and an interfering substance peak, after elution of the second specimen and chromatographic analysis of the second solution to be detected that is obtained by eluting the second specimen by the chromatographic separation device in the second operation mode are completed.

In an implementation, the sample analyzer further includes a display.

The first controller is further configured to control the display to display a display interface including at least the parameter of the glycosylated hemoglobin in the second specimen and the parameter of the interfering substance in the second specimen, after elution of the second specimen and chromatographic analysis of the second solution to be detected that is obtained by eluting the second specimen by the chromatographic separation device in the second operation mode are completed.

In an implementation, the sample analyzer further includes a display.

The first controller is further configured to: in response to determining that there is the interfering substance in the first specimen based on the feedback information from the chromatographic separation device in the first operation mode, control the display to display a display interface including at least the parameter of the glycosylated hemoglobin in the first specimen and prompt information of presence of the interfering substance in the first specimen.

In an implementation, the sample analyzer further includes a display.

The first controller is further configured to: in response to determining that there is the interfering substance in the first specimen based on the feedback information from the chromatographic separation device in the first operation mode, control the display to display a display interface including at least prompt information of presence of the interfering substance in the first specimen and prompt information as to whether to switch to the second operation mode.

The first controller is further configured to: obtain an instruction for switching to the second operation mode, control the specimen supply device to supply the second specimen to the chromatographic separation device, and control the chromatographic separation device to elute the second specimen and perform the chromatographic analysis on the second solution to be detected that is obtained by eluting the second specimen in the second operation mode.

In an implementation, the sample analyzer further includes a display.

The first controller is further configured to: in response to determining that there is no interfering substance in the first specimen based on the feedback information from the chromatographic separation device in the first operation mode, control the display to display a display interface including at least the parameter of the glycosylated hemoglobin in the first specimen.

In an implementation, the sample analyzer further includes a display.

The first controller is further configured to control the display to display a display interface including at least a selectable first operation mode and a selectable second operation mode.

In an implementation, the chromatographic separation device is further controlled by the first controller to elute a third specimen and perform chromatographic analysis on a third solution to be detected that is obtained by eluting the third specimen in a third operation mode.

The first controller is further configured to analyze feedback information from the chromatographic separation device in the third operation mode to obtain a parameter of glycosylated hemoglobin in the third specimen.

Elution duration of the third specimen by the chromatographic separation device in the third operation mode is shorter than that of the first specimen by the chromatographic separation device in the first operation mode.

In an implementation, the sample analyzer further includes a display.

The first controller is further configured to control the display to display a display interface including at least a selectable first operation mode, a selectable second operation mode, and a selectable third operation mode.

In an implementation, the chromatographic separation device includes a chromatographic column, an eluent supply device and a first optical detection assembly.

The specimen supply device is configured to supply the first specimen, the second specimen and the third specimen to the chromatographic column, respectively.

The eluent supply device is controlled by the first controller to prepare a first liquid and a second liquid into an eluent, and to supply eluents containing the second liquid with different concentrations to the chromatographic column respectively.

The chromatographic column is configured to elute the first specimen, the second specimen and the third specimen with the eluents respectively.

The first optical detection assembly is configured to perform the chromatographic analysis on the first solution to be detected that is obtained by eluting the first specimen in the chromatographic column, the second solution to be detected that is obtained by eluting the second specimen in the chromatographic column, and a third solution to be detected that is obtained by eluting the third specimen in the chromatographic column, respectively.

The first controller is further configured to control the eluent supply device to prepare a first liquid and a second liquid into eluents containing the second liquid with different concentrations according to a first concentration control mode in the first operation mode, and to supply the eluents containing the second liquid with different concentrations to the chromatographic column respectively, so as to elute the first specimen in the chromatographic column.

The first controller is further configured to control the eluent supply device to prepare the first liquid and the second liquid into eluents containing the second liquid with different concentrations according to a second concentration control mode in the second operation mode, and to supply the eluents containing the second liquid with different concentrations to the chromatographic column respectively, so as to elute the second specimen in the chromatographic column.

The first controller is further configured to control the eluent supply device to prepare the first liquid and the second liquid into eluents containing the second liquid with different concentrations according to a third concentration control mode in the third operation mode, and to supply the eluents containing the second liquid with different concentrations to the chromatographic column respectively, so as to elute the third specimen in the chromatographic column.

The first concentration control mode, the second concentration control mode and the third concentration control mode are different from one another.

In an implementation, the first controller is further configured to control the chromatographic separation device to elute the first specimen in the first operation mode, elute the second specimen in the second operation mode and elute the third specimen in the third operation mode, using the same chromatographic column.

In an implementation, the third operation mode includes a ninth elution stage and a tenth elution stage arranged in sequence. The ninth elution stage is used for eluting and analyzing glycosylated hemoglobin in the third specimen, and the tenth elution stage is used for eluting and analyzing non-glycosylated hemoglobin and interfering substance in the third specimen.

The first controller is further configured to analyze feedback information from the chromatographic separation device to obtain a chromatographic curve in the third operation mode. The chromatographic curve obtained in the tenth elution stage shows a single wave peak.

A second object of the invention is to provide a sample analyzer including a specimen supply device, a chromatographic separation device, and a first controller

The specimen supply device is configured to supply at least a first specimen and a second specimen to the chromatographic separation device, respectively.

The chromatographic separation device is controlled by the first controller to elute the first specimen and perform chromatographic analysis on a first solution to be detected that is obtained by eluting the first specimen, and to elute the second specimen and perform chromatographic analysis on a second solution to be detected that is obtained by eluting the second specimen.

The chromatographic separation device includes a chromatographic column, an eluent supply device and a first optical detection assembly.

The specimen supply device is configured to supply at least the first specimen and the second specimen to the chromatographic column, respectively.

The eluent supply device is controlled by the first controller to prepare a first liquid and a second liquid into an eluent, and to supply eluents containing the second liquid with different concentrations to the chromatographic column respectively.

The chromatographic column is configured to elute the first specimen and the second specimen with the eluents respectively.

The first optical detection assembly is configured to perform the chromatographic analysis on the first solution to be detected that is obtained by eluting the first specimen in the chromatographic column and the second solution to be detected that is obtained by eluting the second specimen in the chromatographic column respectively.

The first controller is configured to: control the specimen supply device to supply the first specimen to the chromatographic column; control the eluent supply device to prepare the first liquid and the second liquid into the eluents containing the second liquid with different concentrations according to a first concentration control mode and to supply the eluents containing the second liquid with different concentrations to the chromatographic column respectively, so as to elute the first specimen in the chromatographic column; and control the first optical detection assembly to perform the chromatographic analysis on the first solution to be detected that is obtained in the chromatographic column.

The first controller is further configured to: in response to determining that there is an interfering substance in the first specimen based on feedback information from the chromatographic separation device, control the specimen supply device to supply the second specimen to the chromatographic separation device; control the eluent supply device to prepare the first liquid and the second liquid into the eluents containing the second liquid with different concentrations according to a second concentration control mode, and to supply the eluents containing the second liquid with different concentrations to the chromatographic column respectively, so as to elute the second specimen in the chromatographic column; and control the first optical detection assembly to perform the chromatographic analysis on the second solution to be detected that is obtained in the chromatographic column.

The first concentration control mode is different from the second concentration control mode.

In an implementation, the eluent supply device includes a mixing component, a first infusion power component and a second infusion power component.

The first infusion power component is configured to deliver the first liquid from a first container to the mixing component.

The second infusion power component is configured to deliver the second liquid from a second container to the mixing component.

The mixing component is configured to supply the eluents formed by at least one of the first liquid and the second liquid to the chromatographic column.

The first controller is further configured to control the mixing component to supply the eluents containing the second liquid with different concentrations to the chromatographic column by controlling operating parameters of the first infusion power component and the second infusion power component, respectively.

In an implementation, duration in which the eluent supply device supplies the eluent to the chromatographic column according to the first concentration control mode is shorter than duration in which the eluent supply device supplies the eluent to the chromatographic column according to the second concentration control mode.

In an implementation, the eluent supply device supplies the eluent to the chromatographic column according to the first concentration control mode during a first elution stage, a second elution stage and a third elution stage arranged in sequence, and the eluent supply device supplies the eluent to the chromatographic column according to the second concentration control mode during a fourth elution stage, a fifth elution stage and a sixth elution stage arranged in sequence.

The first elution stage and the fourth elution stage are used for eluting and analyzing glycosylated hemoglobin in the first specimen and glycosylated hemoglobin in the second specimen respectively. The second elution stage and the fifth elution stage are used for eluting and analyzing non-glycosylated hemoglobin in the first specimen and non-glycosylated hemoglobin in the second specimen respectively. The third elution stage is used for eluting and analyzing an interfering substance in the first specimen. The sixth elution stage is used for eluting and analyzing an interfering substance in the second specimen.

A concentration of the second liquid in an eluent used in the third elution stage is greater than a concentration of the second liquid in an eluent used in the first elution stage and greater than a concentration of the second liquid in an eluent used in the second elution stage.

A concentration of the second liquid in an eluent used in the sixth elution stage is greater than a concentration of the second liquid in an eluent used in the fourth elution stage and greater than a concentration of the second liquid in an eluent used in the fifth elution stage.

The eluents are prepared from at least one of the first liquid and the second liquid, and an ionic strength of the first liquid is less than an ionic strength of the second liquid.

In an implementation, the concentration of the second liquid in the eluent used in the second elution stage is greater than the concentration of the second liquid in the eluent used in the first elution stage.

The concentration of the second liquid in the eluent used in the fifth elution stage is greater than the concentration of the second liquid in the eluent used in the fourth elution stage.

In an implementation, the first elution stage transitions to the second elution stage in a time period close to the second elution stage with a tendency to gradually increase the concentration of the second liquid in the eluent, and the fourth elution stage transitions to the fifth elution stage in a time period close to the fifth elution stage with a tendency to gradually increase the concentration of the second liquid in the eluent.

The concentration of the second liquid in the eluent used in the time period, close to the second elution stage, in the first elution stage varies to a greater extent than the concentration of the second liquid in the eluent used in the time period, close to the fifth elution stage, in the fourth elution stage.

In an implementation, a concentration of the second liquid in an eluent used in a transition interval between the second elution stage and the third elution stage varies to a greater extent than a concentration of the second liquid in an eluent used in a transition interval between the fifth elution stage and the sixth elution stage.

In an implementation, duration of the fifth elution stage is longer than duration of the second elution stage; and/or, duration of the sixth elution stage is longer than duration of the third elution stage.

In an implementation, duration of the first elution stage is longer than duration of the second elution stage and longer than duration of the third elution stage.

In an implementation, the sample analyzer further includes a display.

The first controller is further configured to control the display to display a display interface including at least a chromatographic curve showing a glycosylated hemoglobin peak, a non-glycosylated hemoglobin peak and an interfering substance peak, after elution of the second specimen using the eluent made in the second concentration control mode and chromatographic analysis of the second solution to be detected that is obtained by eluting the second specimen by the chromatographic separation device are completed.

In an implementation, the sample analyzer further includes a display.

The first controller is further configured to control the display to display a display interface including at least a parameter of glycosylated hemoglobin in the second specimen and a parameter of an interfering substance in the second specimen, after elution of the second specimen using the eluent made in the second concentration control mode and chromatographic analysis of the second solution to be detected that is obtained by eluting the second specimen by the chromatographic separation device are completed.

A third object of the invention is to provide a sample analyzer including specimen supply device, a chromatographic separation device, and a first controller.

The specimen supply device is configured to supply at least a first specimen and a second specimen to the chromatographic separation device, respectively.

The chromatographic separation device is controlled by the first controller to elute the first specimen and perform chromatographic analysis on a first solution to be detected that is obtained by eluting the first specimen in a first operation mode, and to elute the second specimen and perform chromatographic analysis on a second solution to be detected that is obtained by eluting the second specimen in a second operation mode.

The first controller is configured to: in response to determining that there is an interfering substance in the first specimen based on feedback information from the chromatographic separation device in the first operation mode, control the specimen supply device to supply the second specimen to the chromatographic separation device, and to control the chromatographic separation device to elute the second specimen and to perform the chromatographic analysis on the second solution to be detected that is obtained by eluting the second specimen in the second operation mode.

A fourth object of the invention is to provide a sample analysis system including a sample management device, a first sample analyzer, a second sample analyzer, a transfer track and a second controller.

The sample management device is configured to at least place a sample container loaded with a sample.

The first sample analyzer is configured to aspirate the sample from the sample container to perform a glycosylated hemoglobin test item.

The second sample analyzer is configured to aspirate the sample from the sample container to perform a blood routine test item.

The transfer track extends from the sample management device to the first sample analyzer and the second sample analyzer.

The second controller is configured to control the transfer track to transfer the sample container to at least one of the first sample analyzer and the second sample analyzer.

[**00310]** The first sample analyzer includes a specimen supply device, a chromatographic separation device and a first controller. The specimen supply device is configured to aspirate the sample from the sample container to prepare a first specimen and supply the first specimen to the chromatographic separation device, and to aspirate the sample from the sample container to prepare a second specimen and supply the second specimen to the chromatographic separation device. The chromatographic separation device is controlled by the first controller to elute the first specimen and perform chromatographic analysis on a first solution to be detected that is obtained by eluting the first specimen in a first operation mode, and to elute the second specimen and perform chromatographic analysis on a second solution to be detected that is obtained by eluting the second specimen in a second operation mode.

[**00311]** The first controller is configured to analyze feedback information from the chromatographic separation device in the first operation mode to obtain a parameter of glycosylated hemoglobin in the first specimen and a conclusion as to whether there is an interfering substance in the first specimen. The first controller is further configured to analyze feedback information from the chromatographic separation device in the second operation mode to obtain a parameter of glycosylated hemoglobin in the second specimen and a parameter of an interfering substance in the second specimen.

[**00312]** In an implementation, the chromatographic separation device includes a chromatographic column, an eluent supply device, and a first optical detection assembly.

[**00313]** The specimen supply device is configured to supply at least the first specimen and the second specimen to the chromatographic column, respectively.

[**00314]** The eluent supply device is controlled by the first controller to prepare a first liquid and a second liquid into an eluent, and to supply eluents containing the second liquid with different concentrations to the chromatographic column respectively.

[**00315]** The chromatographic column is configured to elute the first specimen and the second specimen with the eluents respectively.

[**00316]** The first optical detection assembly is configured to perform the chromatographic analysis on the first solution to be detected that is obtained by eluting the first specimen in the chromatographic column and the second solution to be detected that is obtained by eluting the second specimen in the chromatographic column respectively.

[**00317]** The first controller is further configured to control the eluent supply device to prepare the first liquid and the second liquid into the eluents containing the second liquid with different concentrations according to a first concentration control mode in the first operation mode, and to supply the eluents containing the second liquid with different concentrations to the chromatographic column respectively, so as to elute the first specimen in the chromatographic column.

[**00318]** The first controller is further configured to control the eluent supply device to prepare the first liquid and the second liquid into the eluents containing the second liquid with different concentrations according to a second concentration control mode in the second operation mode, and to supply the eluents containing the second liquid with different concentrations to the chromatographic column respectively, so as to elute the second specimen in the chromatographic column.

[**00319]** The first concentration control mode is different from the second concentration control mode.

[**00320]** In an implementation, the first controller is further configured to control the chromatographic separation device to elute the first specimen in the first operation mode and elute the second specimen in the second operation mode, using the same chromatographic column.

[**00321]** In an implementation, elution duration of the first specimen by the chromatographic separation device in the first operation mode is shorter than that of the second specimen by the chromatographic separation device in the second operation mode.

[**00322]** In an implementation, the first controller is further configured to: in response to determining that there is an interfering substance in the first specimen based on the feedback information from the chromatographic separation device in the first operation mode, control the specimen supply device to supply the second specimen to the chromatographic separation device, and to control the chromatographic separation device to elute the second specimen and to perform the chromatographic analysis on the second solution to be detected that is obtained by eluting the second specimen in the second operation mode.

[**00323]** In an implementation, the specimen supply device includes a first sample dispensing device, a first reagent dispensing device, a first reaction cell and a first specimen conveying device. The first sample dispensing device is configured to aspirate the sample from the sample container and dispense at least part of the aspirated sample into the first reaction cell. The first reagent dispensing device is configured to aspirate a reagent from a reagent container and dispense the aspirated reagent into the first reaction cell. The first reaction cell is configured to prepare the sample and the reagent into a specimen. The first specimen conveying device is configured to convey the specimen from the first reaction cell to the chromatographic separation device.

[**00324]** The first controller is configured to control the specimen supply device to supply the second specimen to the chromatographic separation device by: controlling the first sample dispensing device to re-aspirate the sample from the sample container and dispense at least part of the re-aspirated sample into the first reaction cell, controlling the first reagent dispensing device to aspirate the reagent from the reagent container and dispense the aspirated reagent into the first reaction cell, controlling the first reaction cell to prepare the sample and the reagent into the second specimen, and controlling the first specimen conveying device to supply the second specimen to the chromatographic separation device.

[**00325]** In an implementation, the first sample analyzer further includes a display.

[**00326]** The first controller is further configured to control the display to display a display interface including at least a chromatographic curve showing a glycosylated hemoglobin peak, a non-glycosylated hemoglobin peak and an interfering substance peak, after elution of the second specimen and chromatographic analysis of the second solution to be detected that is obtained by eluting the second specimen by the chromatographic separation device in the second operation mode are completed.

[**00327]** In an implementation, the first sample analyzer further includes a display. The first controller is further configured to: in response to determining that there is the interfering substance in the first specimen based on the feedback information from the chromatographic separation device in the first operation mode, control the display to display a display interface including at least the parameter of the glycosylated hemoglobin in the first specimen and prompt information of presence of the interfering substance in the first specimen; and/or the first controller is further configured to: in response to determining that there is no interfering substance in the first specimen based on the feedback information from the chromatographic separation device in the first operation mode, control the display to display a display interface including at least the parameter of the glycosylated hemoglobin in the first specimen.

[**00328]** In an implementation, the sample analyzer further includes a display.

[**00329]** The first controller is further configured to: in response to determining that there is the interfering substance in the first specimen based on the feedback information from the chromatographic separation device in the first operation mode, control the display to display a display interface including at least prompt information of presence of the interfering substance in the first specimen and prompt information as to whether to switch to the second operation mode.

[**00330]** The first controller is further configured to: obtain an instruction for switching to the second operation mode, control the specimen supply device to supply the second specimen to the chromatographic separation device, and control the chromatographic separation device to elute the second specimen and perform the chromatographic analysis on the second solution to be detected that is obtained by eluting the second specimen in the second operation mode.

[**00331]** In an implementation, the chromatographic separation device is further controlled by the first controller to elute a third specimen and perform chromatographic analysis on a third solution to be detected that is obtained by eluting the third specimen in a third operation mode.

[**00332]** The first controller is further configured to analyze feedback information from the chromatographic separation device in the third operation mode to obtain a parameter of glycosylated hemoglobin in the third specimen.

[**00333]** Elution duration of the third specimen by the chromatographic separation device in the third operation mode is shorter than that of the first specimen by the chromatographic separation device in the first operation mode.

[**00334]** The above are only preferred embodiments of the invention, and are not intended to limit the scope of the invention. The scope of protection of the invention is defined by the appended claims.

## Claims

1. A sample analyzer (10), comprising a specimen supply device (200), a chromatographic separation device (100) and a first controller; wherein
the specimen supply device (200) is configured to supply at least a first specimen and a second specimen to the chromatographic separation device (100), respectively;
the chromatographic separation device (100) is controlled by the first controller to elute the first specimen and perform chromatographic analysis on a first solution to be detected that is obtained by eluting the first specimen in a first operation mode, and to elute the second specimen and perform chromatographic analysis on a second solution to be detected that is obtained by eluting the second specimen in a second operation mode;
the first controller is configured to analyze feedback information from the chromatographic separation device (100) in the first operation mode to obtain a parameter of glycosylated hemoglobin in the first specimen and a conclusion as to whether there is an interfering substance in the first specimen; and
the first controller is further configured to analyze feedback information from the chromatographic separation device (100) in the second operation mode to obtain a parameter of glycosylated hemoglobin in the second specimen and a parameter of an interfering substance in the second specimen,
wherein elution duration of the first specimen by the chromatographic separation device (100) in the first operation mode is shorter than that of the second specimen by the chromatographic separation device (100) in the second operation mode.

2. The sample analyzer (10) of claim 1, wherein the chromatographic separation device (100) comprises a chromatographic column (110), an eluent supply device (120) and a first optical detection assembly (130);
the specimen supply device (200) is configured to supply at least the first specimen and the second specimen to the chromatographic column (110), respectively;
the eluent supply device (120) is controlled by the first controller to prepare at least one of a first liquid and a second liquid into an eluent, and to supply eluents containing the second liquid with different concentrations to the chromatographic column (110) respectively;
the chromatographic column (110) is configured to elute the first specimen and the second specimen with the eluents respectively;
the first optical detection assembly (130) is configured to perform the chromatographic analysis on the first solution to be detected that is obtained by eluting the first specimen in the chromatographic column (110) and the second solution to be detected that is obtained by eluting the second specimen in the chromatographic column (110) respectively;
the first controller is further configured to control the eluent supply device (120) to prepare at least one of the first liquid and the second liquid into the eluents containing the second liquid with different concentrations according to a first concentration control mode in the first operation mode, and to supply the eluents containing the second liquid with different concentrations to the chromatographic column (110) respectively, so as to elute the first specimen in the chromatographic column (110);
the first controller is further configured to control the eluent supply device (120) to prepare at least one of the first liquid and the second liquid into the eluents containing the second liquid with different concentrations according to a second concentration control mode in the second operation mode, and to supply the eluents containing the second liquid with different concentrations to the chromatographic column (110) respectively, so as to elute the second specimen in the chromatographic column (110); and wherein
the first concentration control mode is different from the second concentration control mode.

3. The sample analyzer (10) of claim 2, wherein the first controller is further configured to control the chromatographic separation device (100) to elute the first specimen in the first operation mode and elute the second specimen in the second operation mode, using the same chromatographic column (110).

4. The sample analyzer (10) of claim 3, wherein the eluent supply device (120) comprises a mixing component (121), a first infusion power component (122) and a second infusion power component (123);
the first infusion power component (122) is configured to deliver the first liquid from a first container (124) to the mixing component (121);
the second infusion power component (123) is configured to deliver the second liquid from a second container (125) to the mixing component (121);
the mixing component (121) is configured to supply the eluents formed by at least one of the first liquid and the second liquid to the chromatographic column (110); and
the first controller is further configured to control the mixing component (121) to supply the eluents containing the second liquid with different concentrations to the chromatographic column (110) by controlling operating parameters of the first infusion power component (122) and the second infusion power component (123), respectively.

5. The sample analyzer (10) of any one of claims 1 to 4, wherein the first operation mode comprises a first elution stage, a second elution stage and a third elution stage arranged in sequence, and the second operation mode comprises a fourth elution stage, a fifth elution stage and a sixth elution stage arranged in sequence;
the first elution stage and the fourth elution stage are used for eluting and analyzing the glycosylated hemoglobin in the first specimen and the glycosylated hemoglobin in the second specimen respectively; the second elution stage and the fifth elution stage are used for eluting and analyzing non-glycosylated hemoglobin in the first specimen and non-glycosylated hemoglobin in the second specimen respectively; the third elution stage is used for eluting and analyzing the interfering substance in the first specimen; and the sixth elution stage is used for eluting and analyzing the interfering substance in the second specimen;
a concentration of the second liquid in an eluent used in the third elution stage is greater than a concentration of the second liquid in an eluent used in the first elution stage and greater than a concentration of the second liquid in an eluent used in the second elution stage;
a concentration of the second liquid in an eluent used in the sixth elution stage is greater than a concentration of the second liquid in an eluent used in the fourth elution stage and greater than a concentration of the second liquid in an eluent used in the fifth elution stage; and wherein
the eluents are prepared from at least one of the first liquid and the second liquid, and an ionic strength of the first liquid is less than an ionic strength of the second liquid.

6. The sample analyzer (10) of claim 5, wherein
the concentration of the second liquid in the eluent used in the second elution stage is greater than the concentration of the second liquid in the eluent used in the first elution stage; and
the concentration of the second liquid in the eluent used in the fifth elution stage is greater than the concentration of the second liquid in the eluent used in the fourth elution stage.

7. The sample analyzer (10) of claim 5, wherein a concentration of the second liquid in an eluent used in a transition interval between the second elution stage and the third elution stage varies to a greater extent than a concentration of the second liquid in an eluent used in a transition interval between the fifth elution stage and the sixth elution stage.

8. The sample analyzer (10) of claim 5, wherein
duration of the fifth elution stage is longer than duration of the second elution stage; and/or,
duration of the sixth elution stage is longer than duration of the third elution stage.

9. The sample analyzer (10) of claim 5, wherein duration of the first elution stage is longer than duration of the second elution stage and longer than duration of the third elution stage.

10. The sample analyzer (10) of claim 5, wherein
the first controller is further configured to analyze the feedback information from the chromatographic separation device (100) to obtain a chromatographic curve in the first operation mode, and to determine that there is an interfering substance in the first specimen when more than two peaks are formed in the chromatographic curve obtained in the second elution stage and the third elution stage; and/or,
the first controller is further configured to analyze the feedback information from the chromatographic separation device (100) to obtain a chromatographic curve in the second operation mode, wherein said chromatographic curve obtained in the fifth elution stage and the sixth elution stage shows more than two peaks.

11. The sample analyzer (10) of claim 1, wherein the first controller is further configured to: in response to determining that there is an interfering substance in the first specimen based on the feedback information from the chromatographic separation device (100) in the first operation mode, control the specimen supply device (200) to supply the second specimen to the chromatographic separation device (100), and to control the chromatographic separation device (100) to elute the second specimen and to perform the chromatographic analysis on the second solution to be detected that is obtained by eluting the second specimen in the second operation mode.

12. The sample analyzer (10) of any one of claims 1 to 4, further comprising a display; wherein
the first controller is further configured to: in response to determining that there is the interfering substance in the first specimen based on the feedback information from the chromatographic separation device (100) in the first operation mode, control the display to display a display interface comprising at least the parameter of the glycosylated hemoglobin in the first specimen and prompt information of presence of the interfering substance in the first specimen.

13. The sample analyzer (10) of any one of claims 1 to 4, further comprising a display; wherein
the first controller is further configured to: in response to determining that there is the interfering substance in the first specimen based on the feedback information from the chromatographic separation device (100) in the first operation mode, control the display to display a display interface comprising at least prompt information of presence of the interfering substance in the first specimen and prompt information as to whether to switch to the second operation mode;
the first controller is further configured to: obtain an instruction for switching to the second operation mode, control the specimen supply device (200) to supply the second specimen to the chromatographic separation device (100), and control the chromatographic separation device (100) to elute the second specimen and perform the chromatographic analysis on the second solution to be detected that is obtained by eluting the second specimen in the second operation mode.

14. The sample analyzer (10) of claim 1, wherein
the chromatographic separation device (100) comprises a chromatographic column (110), an eluent supply device (120) and a first optical detection assembly (130);
the specimen supply device (200) is configured to supply at least the first specimen and the second specimen to the chromatographic column (110), respectively;
the eluent supply device (120) is controlled by the first controller to prepare at least one of a first liquid and a second liquid into an eluent, and to supply eluents containing the second liquid with different concentrations to the chromatographic column (110) respectively;
the chromatographic column (110) is configured to elute the first specimen and the second specimen with the eluents respectively;
the first optical detection assembly (130) is configured to perform the chromatographic analysis on the first solution to be detected that is obtained by eluting the first specimen in the chromatographic column (110) and the second solution to be detected that is obtained by eluting the second specimen in the chromatographic column (110) respectively;
the first controller is further configured to: control the specimen supply device (200) to supply the first specimen to the chromatographic column (110); control the eluent supply device (120) to prepare at least one of the first liquid and the second liquid into the eluents containing the second liquid with different concentrations according to a first concentration control mode and to supply the eluents containing the second liquid with different concentrations to the chromatographic column (110) respectively, so as to elute the first specimen in the chromatographic column (110); and control the first optical detection assembly (130) to perform the chromatographic analysis on the first solution to be detected that is obtained in the chromatographic column (110);
the first controller is further configured to: in response to determining that there is an interfering substance in the first specimen based on feedback information from the chromatographic separation device (100), control the specimen supply device (200) to supply the second specimen to the chromatographic separation device (100); control the eluent supply device (120) to prepare at least one of the first liquid and the second liquid into the eluents containing the second liquid with different concentrations according to a second concentration control mode, and to supply the eluents containing the second liquid with different concentrations to the chromatographic column (110) respectively, so as to elute the second specimen in the chromatographic column (110); and control the first optical detection assembly (130) to perform the chromatographic analysis on the second solution to be detected that is obtained in the chromatographic column (110);
wherein the first concentration control mode is different from the second concentration control mode.

## Patentansprüche

1. Ein Probenanalysegerät (10), umfassend eine Probenzuführvorrichtung (200), eine chromatographische Trennvorrichtung (100) und eine erste Steuereinheit; wobei
die Probenzuführvorrichtung (200) so ausgelegt ist, dass sie der chromatographischen Trennvorrichtung (100) mindestens eine erste Probe und eine zweite Probe zuführt;
die chromatographische Trennvorrichtung (100) von der ersten Steuereinheit so gesteuert wird, dass sie die erste Probe eluiert und eine chromatographische Analyse an einer ersten zu untersuchenden Lösung durchführt, die durch Elution der ersten Probe in einem ersten Betriebsmodus erhalten wird, sowie die zweite Probe eluiert und eine chromatographische Analyse an einer zweiten zu untersuchenden Lösung durchführt, die durch Elution der zweiten Probe in einem zweiten Betriebsmodus erhalten wird;
die erste Steuereinheit so ausgelegt ist, dass sie Rückmeldungsinformationen von der chromatographischen Trennvorrichtung (100) im ersten Betriebsmodus analysiert, um einen Parameter für glykiertes Hämoglobin in der ersten Probe und eine Schlussfolgerung darüber zu erhalten, ob in der ersten Probe eine Störsubstanz vorhanden ist; und
die erste Steuereinheit ferner so ausgelegt ist, dass sie Rückmeldungsinformationen von der chromatographischen Trennvorrichtung (100) im zweiten Betriebsmodus analysiert, um einen Parameter für glykiertes Hämoglobin in der zweiten Probe und einen Parameter für eine Störsubstanz in der zweiten Probe zu erhalten,
wobei die Elutionsdauer der ersten Probe durch die chromatographische Trennvorrichtung (100) im ersten Betriebsmodus kürzer ist als die der zweiten Probe durch die chromatographische Trennvorrichtung (100) im zweiten Betriebsmodus.

2. Das Probenanalysegerät (10) nach Anspruch 1, wobei die chromatographische Trennvorrichtung (100) eine Chromatographiesäule (110), eine Elutionsmittelzuführvorrichtung (120) und eine erste optische Detektionseinheit (130) umfasst;
die Probenzuführvorrichtung (200) so ausgelegt ist, dass sie zumindest die erste Probe und die zweite Probe der Chromatographiesäule (110) zuführt;
die Elutionsmittelzuführvorrichtung (120) von der ersten Steuereinheit gesteuert wird, um mindestens eine erste Flüssigkeit und/oder eine zweite Flüssigkeit zu einem Elutionsmittel aufzubereiten und der Chromatographiesäule (110) Elutionsmittel zuzuführen, die die zweite Flüssigkeit in unterschiedlichen Konzentrationen enthalten;
die Chromatographiesäule (110) so ausgelegt ist, dass sie die erste Probe und die zweite Probe jeweils mit den Elutionsmitteln eluiert;
die erste optische Detektionseinheit (130) so ausgelegt ist, dass sie die chromatographische Analyse an der ersten zu untersuchenden Lösung, die durch Elution der ersten Probe in der Chromatographiesäule (110) erhalten wird, und an der zweiten zu untersuchenden Lösung, die durch Elution der zweiten Probe in der Chromatographiesäule (110) erhalten wird, durchführt;
die erste Steuereinheit ferner so ausgelegt ist, dass sie die Elutionsmittelzuführvorrichtung (120) so steuert, dass sie im ersten Betriebsmodus gemäß einem ersten Konzentrationssteuerungsmodus mindestens die erste Flüssigkeit und/oder die zweite Flüssigkeit zu den Elutionsmitteln verarbeitet, die die zweite Flüssigkeit in unterschiedlichen Konzentrationen enthalten, und die Elutionsmittel, die die zweite Flüssigkeit in unterschiedlichen Konzentrationen enthalten, jeweils der Chromatographiesäule (110) zuführt, um die erste Probe in der Chromatographiesäule (110) zu eluieren;
die erste Steuereinheit ferner so ausgelegt ist, dass sie die Elutionsmittelzuführvorrichtung (120) so steuert, dass sie zumindest die erste Flüssigkeit und/oder die zweite Flüssigkeit gemäß einem zweiten Konzentrationssteuerungsmodus im zweiten Betriebsmodus zu Elutionsmitteln mit unterschiedlichen Konzentrationen der zweiten Flüssigkeit aufbereitet und die Elutionsmittel mit unterschiedlichen Konzentrationen der zweiten Flüssigkeit jeweils der Chromatographiesäule (110) zuführt, um die zweite Probe in der Chromatographiesäule (110) zu eluieren; und wobei
der erste Konzentrationssteuerungsmodus sich vom zweiten Konzentrationssteuerungsmodus unterscheidet.

3. Das Probenanalysegerät (10) nach Anspruch 2, wobei die erste Steuereinheit ferner so ausgelegt ist, dass sie die chromatographische Trennvorrichtung (100) so steuert, dass die erste Probe im ersten Betriebsmodus und die zweite Probe im zweiten Betriebsmodus unter Verwendung derselben Chromatographiesäule (110) eluiert wird.

4. Das Probenanalysegerät (10) nach Anspruch 3, wobei die Elutionsmittelzuführvorrichtung (120) eine Mischkomponente (121), eine erste Zuführkomponente (122) und eine zweite Zuführkomponente (123) umfasst;
die erste Zuführkomponente (122) so ausgelegt ist, dass sie die erste Flüssigkeit aus einem ersten Behälter (124) an die Mischkomponente (121) abgibt;
die zweite Zuführkomponente (123) so ausgelegt ist, dass sie die zweite Flüssigkeit aus einem zweiten Behälter (125) an die Mischkomponente (121) abgibt;
die Mischkomponente (121) so ausgelegt ist, dass sie die mindestens aus der ersten Flüssigkeit und/oder der zweiten Flüssigkeit bestehenden Elutionsmittel der Chromatographiesäule (110) zuführt; und
die erste Steuereinheit ferner so ausgelegt ist, dass sie die Mischkomponente (121) so steuert, dass die Elutionsmittel, die die zweite Flüssigkeit in unterschiedlichen Konzentrationen enthalten, der Chromatographiesäule (110) zugeführt werden, indem sie die Betriebsparameter der ersten Zuführkomponente (122) bzw. der zweiten Zuführkomponente (123) steuert.

5. Das Probenanalysegerät (10) nach einem der Ansprüche 1 bis 4, wobei der erste Betriebsmodus eine erste Elutionsstufe, eine zweite Elutionsstufe und eine dritte Elutionsstufe umfasst, die nacheinander angeordnet sind, und der zweite Betriebsmodus eine vierte Elutionsstufe, eine fünfte Elutionsstufe und eine sechste Elutionsstufe umfasst, die nacheinander angeordnet sind;
die erste Elutionsstufe und die vierte Elutionsstufe jeweils zum Eluieren und Analysieren des glykierten Hämoglobins in der ersten Probe und des glykierten Hämoglobins in der zweiten Probe dienen; die zweite Elutionsstufe und die fünfte Elutionsstufe jeweils zum Eluieren und Analysieren des nicht-glykierten Hämoglobins in der ersten Probe und des nicht-glykierten Hämoglobins in der zweiten Probe dienen; die dritte Elutionsstufe zum Eluieren und Analysieren der Störsubstanz in der ersten Probe; und die sechste Elutionsstufe zum Eluieren und Analysieren der Störsubstanz in der zweiten Probe dienen;
eine Konzentration der zweiten Flüssigkeit in einem in der dritten Elutionsstufe verwendeten Elutionsmittel größer ist als die Konzentration der zweiten Flüssigkeit in einem in der ersten Elutionsstufe verwendeten Elutionsmittel und größer als die Konzentration der zweiten Flüssigkeit in einem in der zweiten Elutionsstufe verwendeten Elutionsmittel;
die Konzentration der zweiten Flüssigkeit in einem in der sechsten Elutionsstufe verwendeten Elutionsmittel größer ist als die Konzentration der zweiten Flüssigkeit in einem in der vierten Elutionsstufe verwendeten Elutionsmittel und größer als die Konzentration der zweiten Flüssigkeit in einem in der fünften Elutionsstufe verwendeten Elutionsmittel; und wobei
die Elutionsmittel aus mindestens der ersten Flüssigkeit und/oder der zweiten Flüssigkeit hergestellt werden und die Ionenstärke der ersten Flüssigkeit geringer ist als die Ionenstärke der zweiten Flüssigkeit.

6. Das Probenanalysegerät (10) nach Anspruch 5, wobei
die Konzentration der zweiten Flüssigkeit in dem in der zweiten Elutionsstufe verwendeten Elutionsmittel höher ist als die Konzentration der zweiten Flüssigkeit in dem in der ersten Elutionsstufe verwendeten Elutionsmittel; und
die Konzentration der zweiten Flüssigkeit in dem in der fünften Elutionsstufe verwendeten Elutionsmittel größer ist als die Konzentration der zweiten Flüssigkeit in dem in der vierten Elutionsstufe verwendeten Elutionsmittel.

7. Das Probenanalysegerät (10) nach Anspruch 5, wobei eine Konzentration der zweiten Flüssigkeit in einem Elutionsmittel, das in einem Übergangsintervall zwischen der zweiten Elutionsstufe und der dritten Elutionsstufe verwendet wird, in größerem Maße variiert als eine Konzentration der zweiten Flüssigkeit in einem Elutionsmittel, das in einem Übergangsintervall zwischen der fünften Elutionsstufe und der sechsten Elutionsstufe verwendet wird.

8. Das Probenanalysegerät (10) nach Anspruch 5, wobei
die Dauer der fünften Elutionsstufe länger ist als die Dauer der zweiten Elutionsstufe; und/oder
die Dauer der sechsten Elutionsstufe länger ist als die Dauer der dritten Elutionsstufe.

9. Das Probenanalysegerät (10) nach Anspruch 5, wobei die Dauer der ersten Elutionsstufe länger ist als die Dauer der zweiten Elutionsstufe und länger als die Dauer der dritten Elutionsstufe.

10. Das Probenanalysegerät (10) nach Anspruch 5, wobei
die erste Steuereinheit ferner so ausgelegt ist, dass sie die Rückmeldungsinformationen von der chromatographischen Trennvorrichtung (100) analysiert, um eine chromatographische Kurve im ersten Betriebsmodus zu erhalten, und feststellt, dass in der ersten Probe eine Störsubstanz vorhanden ist, wenn in der in der zweiten Elutionsstufe und der dritten Elutionsstufe erhaltenen chromatographischen Kurve mehr als zwei Peaks gebildet werden; und/oder
die erste Steuereinheit ferner so ausgelegt ist, dass sie die Rückmeldungsinformationen von der chromatographischen Trennvorrichtung (100) analysiert, um eine chromatographische Kurve im zweiten Betriebsmodus zu erhalten, wobei die in der fünften Elutionsstufe und der sechsten Elutionsstufe erhaltene chromatographische Kurve mehr als zwei Peaks aufweist.

11. Das Probenanalysegerät (10) nach Anspruch 1, wobei die erste Steuereinheit ferner so ausgelegt ist, dass sie:
als Reaktion auf die Feststellung, dass in der ersten Probe eine Störsubstanz vorhanden ist, basierend auf den Rückmeldungsinformationen von der chromatographischen Trennvorrichtung (100) im ersten Betriebsmodus, die Probenzuführvorrichtung (200) so steuert, dass die zweite Probe der chromatographischen Trennvorrichtung (100) zugeführt wird, und die chromatographische Trennvorrichtung (100) so steuert, dass die zweite Probe eluiert wird und die chromatographische Analyse an der zu untersuchenden zweiten Lösung durchgeführt wird, die durch Elution der zweiten Probe im zweiten Betriebsmodus erhalten wird.

12. Das Probenanalysegerät (10) nach einem der Ansprüche 1 bis 4, das ferner eine Anzeige umfasst; wobei
die erste Steuereinheit ferner so ausgelegt ist, dass sie: als Reaktion auf die Feststellung basierend auf den Rückmeldungsinformationen von der chromatographischen Trennvorrichtung (100), dass die erste Probe eine Störsubstanz enthält, im ersten Betriebsmodus die Anzeige so steuert, dass eine Anzeigeoberfläche angezeigt wird, die mindestens den Parameter des glykierten Hämoglobins in der ersten Probe sowie eine Meldung über das Vorhandensein der Störsubstanz in der ersten Probe umfasst.

13. Das Probenanalysegerät (10) nach einem der Ansprüche 1 bis 4, das ferner eine Anzeige umfasst; wobei
die erste Steuereinheit ferner so ausgelegt ist, dass sie: als Reaktion auf die Feststellung basierend auf den Rückmeldungsinformationen von der chromatographischen Trennvorrichtung (100), dass in der ersten Probe eine Störsubstanz vorhanden ist, im ersten Betriebsmodus die Anzeige so steuert, dass eine Anzeigeoberfläche angezeigt wird, die mindestens eine Hinweisinformation über das Vorhandensein der Störsubstanz in der ersten Probe und eine Hinweisinformation darüber enthält, ob in den zweiten Betriebsmodus umgeschaltet werden soll;
die erste Steuereinheit ferner so ausgelegt ist, dass sie: einen Befehl zum Umschalten in den zweiten Betriebsmodus empfängt, die Probenzuführvorrichtung (200) so zu steuern, dass diese die zweite Probe der chromatographischen Trennvorrichtung (100) zuführt, und die chromatographische Trennvorrichtung (100) so zu steuern, dass die zweite Probe eluiert wird und die chromatographische Analyse an der zu untersuchenden zweiten Lösung durchgeführt wird, die durch Elution der zweiten Probe im zweiten Betriebsmodus erhalten wird.

14. Das Probenanalysegerät (10) nach Anspruch 1, wobei
die chromatographische Trennvorrichtung (100) eine Chromatographiesäule (110), eine Elutionsmittelzuführvorrichtung (120) und eine erste optische Detektionseinheit (130) umfasst;
die Probenzuführvorrichtung (200) so ausgelegt ist, dass sie der Chromatographiesäule (110) zumindest die erste Probe und die zweite Probe zuführt;
die Elutionsmittelzuführvorrichtung (120) von der ersten Steuereinheit gesteuert wird, um mindestens eine erste Flüssigkeit und eine zweite Flüssigkeit zu einem Elutionsmittel zu mischen und Elutionsmittel zuzuführen, die die zweite Flüssigkeit mit unterschiedlichen Konzentrationen jeweils in die Chromatographiesäule (110) einleiten;
die Chromatographiesäule (110) so ausgelegt ist, dass sie die erste Probe und die zweite Probe jeweils mit den Elutionsmitteln eluiert;
die erste optische Detektionseinheit (130) so konfiguriert ist, dass sie die chromatographische Analyse an der ersten zu untersuchenden Lösung durchführt, die durch Elution der ersten Probe in der Chromatographiesäule (110) erhalten wird, und an der zweiten zu untersuchenden Lösung, die durch Elution der zweiten Probe in der Chromatographiesäule (110) erhalten wird;
die erste Steuereinheit ferner so ausgelegt ist, dass sie: die Probenzuführvorrichtung (200) so steuert, dass sie die erste Probe der Chromatographiesäule (110) zuführt; die Elutionsmittelzuführvorrichtung (120) so steuert, dass sie mindestens die erste Flüssigkeit und/oder die zweite Flüssigkeit gemäß einem ersten Konzentrationssteuerungsmodus zu Elutionsmitteln verarbeitet, die die zweite Flüssigkeit in unterschiedlichen Konzentrationen enthalten, und die Elutionsmittel, die die zweite Flüssigkeit in unterschiedlichen Konzentrationen enthalten, jeweils der Chromatographiesäule (110) zuführt, um die erste Probe in der Chromatographiesäule (110) zu eluieren; und die erste optische Detektionseinheit (130) so zu steuern, dass sie die chromatographische Analyse an der zu untersuchenden ersten Lösung durchführt, die in der Chromatographiesäule (110) erhalten wird;
die erste Steuereinheit ferner so ausgelegt ist, dass sie: als Reaktion auf die Feststellung basierend auf Rückmeldungsinformationen von der chromatographischen Trennvorrichtung (100), dass in der ersten Probe eine Störsubstanz vorhanden ist, die Probenzuführvorrichtung (200) so steuert, dass die zweite Probe der chromatographischen Trennvorrichtung (100) zugeführt wird; die Elutionsmittelzufuhrvorrichtung (120) so steuert, dass sie mindestens die erste Flüssigkeit und/oder die zweite Flüssigkeit gemäß einem zweiten Konzentrationssteuerungsmodus zu Elutionsmitteln mit unterschiedlichen Konzentrationen der zweiten Flüssigkeit aufbereitet und die Elutionsmittel mit unterschiedlichen Konzentrationen der zweiten Flüssigkeit jeweils der Chromatographiesäule (110) zuführt, um die zweite Probe in der Chromatographiesäule (110) zu eluieren; und die erste optische Detektionseinheit (130) so steuert, dass sie die chromatographische Analyse an der zu untersuchenden zweiten Lösung durchführt, die in der Chromatographiesäule (110) erhalten wird;
wobei sich der erste Konzentrationssteuerungsmodus vom zweiten Konzentrationssteuerungsmodus unterscheidet.

## Revendications

1. Analyseur d'échantillon (10), comprenant un dispositif de fourniture de prélèvement (200), un dispositif de séparation chromatographique (100) et une première unité de commande ; dans lequel
le dispositif de fourniture de prélèvement (200) est configuré pour fournir au moins un premier prélèvement et un second prélèvement au dispositif de séparation chromatographique (100), respectivement ;
le dispositif de séparation chromatographique (100) est commandé par la première unité de commande pour éluer le premier prélèvement et réaliser une analyse chromatographique sur une première solution à détecter qui est obtenue en éluant le premier prélèvement dans un premier mode de fonctionnement, et pour éluer le second prélèvement et réaliser une analyse chromatographique sur une seconde solution à détecter qui est obtenue en éluant le second prélèvement dans un second mode de fonctionnement ;
la première unité de commande est configurée pour analyser des informations de données émanant du dispositif de séparation chromatographique (100) dans le premier mode de fonctionnement pour obtenir un paramètre d'hémoglobine glyquée dans le premier prélèvement et une conclusion quant à l'existence ou non d'une substance interférente dans le premier prélèvement ; et
la première unité de commande est en outre configurée pour analyser des informations de données émanant du dispositif de séparation chromatographique (100) dans le second mode de fonctionnement pour obtenir un paramètre d'hémoglobine glyquée dans le second prélèvement et un paramètre d'une substance interférente dans le second prélèvement,
où la durée d'élution du premier prélèvement par le dispositif de séparation chromatographique (100) dans le premier mode de fonctionnement est plus courte que la durée d'élution du second prélèvement par le dispositif de séparation chromatographique (100) dans le second mode de fonctionnement.

2. Analyseur d'échantillon (10) selon la revendication 1, dans lequel le dispositif de séparation chromatographique (100) comprend une colonne chromatographique (110), un dispositif de fourniture d'éluant (120) et un premier ensemble de détection optique (130) ;
le dispositif de fourniture de prélèvement (200) est configuré pour fournir au moins le premier prélèvement et le second prélèvement à la colonne chromatographique (110), respectivement ;
le dispositif de fourniture d'éluant (120) est commandé par la première unité de commande pour préparer au moins un liquide parmi un premier liquide et un second liquide dans un éluant, et pour fournir des éluants contenant le second liquide à différentes concentrations à la colonne chromatographique (110) respectivement ;
la colonne chromatographique (110) est configurée pour éluer le premier prélèvement et le second prélèvement avec les éluants respectivement ;
le premier ensemble de détection optique (130) est configuré pour réaliser l'analyse chromatographique sur la première solution à détecter qui est obtenue en éluant le premier prélèvement dans la colonne chromatographique (110) et la seconde solution à détecter qui est obtenue en éluant le second prélèvement dans la colonne chromatographique (110) respectivement ;
la première unité de commande est en outre configurée pour commander au dispositif de fourniture d'éluant (120) de préparer au moins un liquide parmi le premier liquide et le second liquide dans les éluants contenant le second liquide à différentes concentrations selon un premier mode de commande de concentration dans le premier mode de fonctionnement, et de fournir les éluants contenant le second liquide à différentes concentrations à la colonne chromatographique (110) respectivement, de sorte à éluer le premier prélèvement dans la colonne chromatographique (110) ;
la première unité de commande est en outre configurée pour commander au dispositif de fourniture d'éluant (120) de préparer au moins un liquide parmi le premier liquide et le second liquide dans les éluants contenant le second liquide à différentes concentrations selon un second mode de commande de concentration dans le second mode de fonctionnement, et de fournir les éluants contenant le second liquide à différentes concentrations à la colonne chromatographique (110) respectivement, de sorte à éluer le second prélèvement dans la colonne chromatographique (110) ; et où
le premier mode de commande de concentration est différent du second mode de commande de concentration.

3. Analyseur d'échantillon (10) selon la revendication 2, dans lequel la première unité de commande est en outre configurée pour commander au dispositif de séparation chromatographique (100) d'éluer le premier prélèvement dans le premier mode de fonctionnement et d'éluer le second prélèvement dans le second mode de fonctionnement, en utilisant la même colonne chromatographique (110).

4. Analyseur d'échantillon (10) selon la revendication 3, dans lequel le dispositif de fourniture d'éluant (120) comprend un composant de mélange (121), un premier composant de puissance de perfusion (122) et un second composant de puissance de perfusion (123) ;
le premier composant de puissance de perfusion (122) est configuré pour délivrer le premier liquide depuis un premier récipient (124) au composant de mélange (121) ;
le second composant de puissance de perfusion (123) est configuré pour délivrer le second liquide depuis un second récipient (125) au composant de mélange (121) ;
le composant de mélange (121) est configuré pour fournir les éluants formés par au moins un liquide parmi le premier liquide et le second liquide à la colonne chromatographique (110) ; et
la première unité de commande est en outre configurée pour commander au composant de mélange (121) de fournir les éluants contenant le second liquide à différentes concentrations à la colonne chromatographique (110) en commandant des paramètres opératoires du premier composant de puissance de perfusion (122) et du second composant de puissance de perfusion (123), respectivement.

5. Analyseur d'échantillon (10) selon l'une quelconque des revendications 1 à 4, dans lequel le premier mode de fonctionnement comprend une première étape d'élution, une deuxième étape d'élution et une troisième étape d'élution prévues successivement, et le second mode de fonctionnement comprend une quatrième étape d'élution, une cinquième étape d'élution et une sixième étape d'élution prévues successivement ;
la première étape d'élution et la quatrième étape d'élution sont utilisées pour éluer et analyser l'hémoglobine glyquée dans le premier prélèvement et l'hémoglobine glyquée dans le second prélèvement respectivement ; la deuxième étape d'élution et la cinquième étape d'élution sont utilisées pour éluer et analyser l'hémoglobine non glyquée dans le premier prélèvement et l'hémoglobine non glyquée dans le second prélèvement respectivement ; la troisième étape d'élution est utilisée pour éluer et analyser la substance interférente dans le premier prélèvement ; et la sixième étape d'élution est utilisée pour éluer et analyser la substance interférente dans le second prélèvement ;
une concentration du second liquide dans un éluant utilisé dans la troisième étape d'élution est supérieure à une concentration du second liquide dans un éluant utilisé dans la première étape d'élution et supérieure à une concentration du second liquide dans un éluant utilisé dans la deuxième étape d'élution ;
une concentration du second liquide dans un éluant utilisé dans la sixième étape d'élution est supérieure à une concentration du second liquide dans un éluant utilisé dans la quatrième étape d'élution et supérieure à une concentration du second liquide dans un éluant utilisé dans la cinquième étape d'élution ; et où
les éluants sont préparés à partir d'au moins un liquide parmi le premier liquide et le second liquide, et une force ionique du premier liquide est inférieure à une force ionique du second liquide.

6. Analyseur d'échantillon (10) selon la revendication 5, dans lequel
la concentration du second liquide dans l'éluant utilisé dans la deuxième étape d'élution est supérieure à la concentration du second liquide dans l'éluant utilisé dans la première étape d'élution ; et
la concentration du second liquide dans l'éluant utilisé dans la cinquième étape d'élution est supérieure à la concentration du second liquide dans l'éluant utilisé dans la quatrième étape d'élution.

7. Analyseur d'échantillon (10) selon la revendication 5, dans lequel une concentration du second liquide dans un éluant utilisé dans un intervalle de transition entre la deuxième étape d'élution et la troisième étape d'élution varie dans une plus forte mesure qu'une concentration du second liquide dans un éluant utilisé dans un intervalle de transition entre la cinquième étape d'élution et la sixième étape d'élution.

8. Analyseur d'échantillon (10) selon la revendication 5, dans lequel
la durée de la cinquième étape d'élution est plus importante que la durée de la deuxième étape d'élution ; et/ou
la durée de la sixième étape d'élution est plus importante que la durée de la troisième étape d'élution.

9. Analyseur d'échantillon (10) selon la revendication 5, dans lequel la durée de la première étape d'élution est plus importante que la durée de la deuxième étape d'élution et plus importante que la durée de la troisième étape d'élution.

10. Analyseur d'échantillon (10) selon la revendication 5, dans lequel
la première unité de commande est en outre configurée pour analyser les informations de données émanant du dispositif de séparation chromatographique (100) pour obtenir un tracé chromatographique dans le premier mode de fonctionnement, et pour déterminer qu'il existe une substance interférente dans le premier prélèvement lorsque plus de deux pics sont formés sur le tracé chromatographique obtenu dans la deuxième étape d'élution et la troisième étape d'élution ; et/ou
la première unité de commande est en outre configurée pour analyser les informations de données émanant du dispositif de séparation chromatographique (100) pour obtenir un tracé chromatographique dans le second mode de fonctionnement, où ledit tracé chromatographique obtenu dans la cinquième étape d'élution et la sixième étape d'élution présente plus de deux pics.

11. Analyseur d'échantillon (10) selon la revendication 1, dans lequel la première unité de commande est en outre configurée pour :
en réponse à la détermination du fait qu'il existe une substance interférente dans le premier prélèvement sur la base des informations de données émanant du dispositif de séparation chromatographique (100) dans le premier mode de fonctionnement, commander au dispositif de fourniture de prélèvement (200) de fournir le second prélèvement au dispositif de séparation chromatographique (100), et pour commander au dispositif de séparation chromatographique (100) d'éluer le second prélèvement et de réaliser l'analyse chromatographique sur la seconde solution à détecter qui est obtenue en éluant le second prélèvement dans le second mode de fonctionnement.

12. Analyseur d'échantillon (10) selon l'une quelconque des revendications 1 à 4, comprenant en outre un affichage ; dans lequel
la première unité de commande est en outre configurée pour : en réponse à la détermination du fait qu'il existe la substance interférente dans le premier prélèvement sur la base des informations de données émanant du dispositif de séparation chromatographique (100) dans le premier mode de fonctionnement, commander à l'affichage d'afficher une interface d'affichage comprenant au moins le paramètre de l'hémoglobine glyquée dans le premier prélèvement et des informations rapides de présence de la substance interférente dans le premier prélèvement.

13. Analyseur d'échantillon (10) selon l'une quelconque des revendications 1 à 4, comprenant en outre un affichage ; dans lequel
la première unité de commande est en outre configurée pour : en réponse à la détermination du fait qu'il existe la substance interférente dans le premier prélèvement sur la base des informations de données émanant du dispositif de séparation chromatographique (100) dans le premier mode de fonctionnement, commander à l'affichage d'afficher une interface d'affichage comprenant au moins des informations rapides de présence de la substance interférente dans le premier prélèvement et des informations rapides quant au fait de basculer dans le second mode de fonctionnement ;
la première unité de commande est en outre configurée pour : obtenir une instruction de basculement dans le second mode de fonctionnement, commander au dispositif de fourniture de prélèvement (200) de fournir le second prélèvement au dispositif de séparation chromatographique (100), et commander au dispositif de séparation chromatographique (100) d'éluer le second prélèvement et de réaliser l'analyse chromatographique sur la seconde solution à détecter qui est obtenue en éluant le second prélèvement dans le second mode de fonctionnement.

14. Analyseur d'échantillon (10) selon la revendication 1, dans lequel
le dispositif de séparation chromatographique (100) comprend une colonne chromatographique (110), un dispositif de fourniture d'éluant (120) et un premier ensemble de détection optique (130) ;
le dispositif de fourniture de prélèvement (200) est configuré pour fournir au moins le premier prélèvement et le second prélèvement à la colonne chromatographique (110), respectivement ;
le dispositif de fourniture d'éluant (120) est commandé par la première unité de commande pour préparer au moins un liquide parmi un premier liquide et un second liquide dans un éluant, et pour fournir des éluants contenant le second liquide à différentes concentrations à la colonne chromatographique (110) respectivement ;
la colonne chromatographique (110) est configurée pour éluer le premier prélèvement et le second prélèvement avec les éluants respectivement ;
le premier ensemble de détection optique (130) est configuré pour réaliser l'analyse chromatographique sur la première solution à détecter qui est obtenue en éluant le premier prélèvement dans la colonne chromatographique (110) et la seconde solution à détecter qui est obtenue en éluant le second prélèvement dans la colonne chromatographique (110) respectivement ;
la première unité de commande est en outre configurée pour : commander au dispositif de fourniture de prélèvement (200) de fournir le premier prélèvement à la colonne chromatographique (110) ; commander au dispositif de fourniture d'éluant (120) de préparer au moins un liquide parmi le premier liquide et le second liquide dans les éluants contenant le second liquide à différentes concentrations selon un premier mode de commande de concentration et de fournir les éluants contenant le second liquide à différentes concentrations à la colonne chromatographique (110) respectivement, de sorte à éluer le premier prélèvement dans la colonne chromatographique (110) ; et commander au premier ensemble de détection optique (130) de réaliser l'analyse chromatographique sur la première solution à détecter qui est obtenue dans la colonne chromatographique (110) ;
la première unité de commande est en outre configurée pour : en réponse à la détermination du fait qu'il existe une substance interférente dans le premier prélèvement sur la base des informations de données émanant du dispositif de séparation chromatographique (100), commander au dispositif de fourniture de prélèvement (200) de fournir le second prélèvement au dispositif de séparation chromatographique (100) ; commander au dispositif de fourniture d'éluant (120) de préparer au moins un liquide parmi le premier liquide et le second liquide dans les éluants contenant le second liquide à différentes concentrations selon un second mode de commande de concentration, et de fournir les éluants contenant le second liquide à différentes concentrations à la colonne chromatographique (110) respectivement, de sorte à éluer le second prélèvement dans la colonne chromatographique (110) ; et commander au premier ensemble de détection optique (130) de réaliser l'analyse chromatographique sur la seconde solution à détecter qui est obtenue dans la colonne chromatographique (110) ;
où le premier mode de commande de concentration est différent du second mode de commande de concentration.
